# FASCICULE DE BREVET EUROPEEN

(11) **EP 3 089 948 B1**
(45) Date de publication et mention de la délivrance du brevet: **28.02.2018**
(21) Numéro de dépôt: 14831011.3
(22) Date de dépôt: 23.12.2014
(51) Int. Cl.: C03C 17/34, C03C 17/42, G02F 1/1335, G02B 6/00

(54) **VITRAGE LUMINEUX AVEC ISOLATEUR OPTIQUE ET SA FABRICATION**
BELEUCHTETE GLASSCHEIBE MIT EINEM OPTISCHEN ISOLATOR UND HERSTELLUNG DAVON
ILLUMINATED GLASS PANEL WITH OPTICAL ISOLATOR AND MANUFACTURE THEREOF

(30) Priorité: 31.12.2013 FR 1363759
(43) Date de publication de la demande: 09.11.2016
(73) Titulaire: Saint-Gobain Glass France, 92400 Courbevoie (FR)
(72) Inventeur: MORLENS, Stéphanie, F-75018 Paris (FR); RONDET, Mauricette, F-94400 Vitry Sur Seine (FR); LALUET, Jean-Yves, F-75019 Paris (FR); GUISET, Pierrick, F-91300 Massy (FR)
(74) Mandataire: Saint-Gobain Recherche
(86) Numéro de dépôt international: PCT/FR2014/053528
(87) Numéro de publication internationale: WO 2015/101744

(56) Documents cités:
- WO-A2-2008/059170
- WO-A2-2008/059171

## Description

La présente invention se rapporte au domaine de l'éclairage et plus particulièrement concerne un vitrage lumineux avec isolateur optique et sa fabrication.

Il est connu de former un vitrage lumineux en éclairant un verre par la tranche avec des diodes électroluminescentes. La lumière ainsi injectée est guidée par réflexion totale interne à l'intérieur de ce verre grâce au contraste d'indice avec les matériaux environnants. Cette lumière est ensuite extraite à l'aide d'un motif diffusant.

Le document WO2008/059171 propose, en relation avec la figure 5, un panneau lumineux à éclairage par la tranche comportant un guide plan, qui est un verre clair d'épaisseur 2 mm, dont la tranche est couplée à une source de lumière, qui est un réseau de diodes électroluminescentes, et comportant sur une première face principale :
- une couche poreuse discontinue, d'épaisseur de l'ordre de 300nm et d'indice n2 égal à 1,1, qui est une couche sol gel de silice poreuse,
- une couche diffusante sur la couche de silice poreuse et couvrant entièrement la première face.

Lorsque la source de lumière n'est pas allumée, le panneau présente un aspect blanc homogène et diffusant et sert par exemple comme cloison, pour préserver l'intimité (effet privacy). Lorsque la source de lumière est allumée, on perçoit par contraste les zones sans couche de silice poreuse, par exemples des bandes décoratives et/ou formant un élément de signalétique, un logo, une marque ...

Dans une variante, par exemple pour un carrelage mural, la couche de silice poreuse bas indice est continue, la couche diffusante est opaque, par exemple une laque, le guide plan est un carreau en verre épais de 6mm et on ajoute un réseau diffusant sur la face externe du carreau.

Cette couche poreuse, grâce à sa faible densité à un indice optique nettement inférieur à celui du verre permet d'isoler optiquement le verre de la laque.

WO 2008/059170 divulgue un toit lumineux pour automobile dans la figure 11. Toutefois, il s'avère que cette solution n'est pas assez robuste ou à tout le moins son efficacité n'est pas optimale, on souhaite mieux encore contrôler l'extraction de lumière en un ou des points bien définis et par exemple bien répartis sur la surface du verre.

Pour pallier ces inconvénients, l'invention propose un vitrage lumineux comportant :
- un premier substrat verrier, en verre minéral (transparent, clair, extraclair), d'indice de réfraction n1 inférieur à 1,65 à 550nm et même à 1,6, mieux dans l'ensemble du spectre visible, avec des première et deuxième face principales et une tranche, première face principale porteuse :
- d'un premier revêtement (absorbant et/ou diffusant) sous forme d'une peinture ou d'un émail, en contact optique avec la première face principale, premier revêtement notamment continu ou discontinu sur une zone du premier substrat ou sur plusieurs zones, même couvrant sensiblement le premier substrat,
- d'un isolateur optique, sur la première face principale (notamment directement sur la première face, au moins hors zone(s) avec moyens d'extraction de lumière) et sous le premier revêtement, l'isolateur optique comportant (de préférence étant constitué d') une couche de silice poreuse, notamment sol-gel, d'épaisseur e2 d'au moins 300nm et de préférence d'au plus 1,5µm, mieux d'au moins 400nm, d'indice de réfraction n2 à 550nm (mieux dans l'ensemble du spectre visible) d'au plus 1,35, de préférence d'au plus 1,25 et même inférieur à 1,2,
- une source de lumière, de préférence un ensemble de diodes électroluminescentes (alignées, notamment en rangée(s)) ou une fibre optique extractrice, couplée optiquement au premier substrat verrier, de préférence par la tranche, dite tranche de couplage, ou en variante couplée optiquement à l'une des faces principales (notamment avec un trou pour loger des diodes), le premier substrat verrier guidant la lumière émise par la source de lumière,
- de préférence des moyens d'extraction de lumière (issue du guidage) associés au premier substrat verrier (éventuellement vendus séparément ou dans un vitrage lumineux en kit et/ou ajoutés par l'utilisateur)-notamment des moyens diffusants du côté de la première face principale et/ou du côté de (même de préférence sur) la deuxième face principale et/ou dans la masse du premier substrat verrier - moyens d'extraction de lumière éventuellement formant concentrateur de la lumière.

Le vitrage lumineux comprend en outre un revêtement de protection, minéral et transparent, directement sur la couche de silice poreuse et directement sous le premier revêtement.

La Demanderesse a constaté qu'en appliquant directement la peinture sur la couche de silice poreuse sa fonction d'isolateur optique était perdue.

Il est probable que les pores, en particulier ceux ouverts en surface, de la couche poreuse soient pollués par la peinture, tout particulièrement qu'un solvant (aqueux et/ou organique notamment tel que le xylène) de la peinture migre dans les pores au moment de la fabrication et reste piégé dans les pores même après un éventuel traitement thermique (pour fixer la peinture).

La Demanderesse a même constaté aussi qu'en appliquant directement un émail sur la couche de silice poreuse sa fonction d'isolateur optique était diminuée.

La transparence du revêtement de protection permet en particulier de préserver la vision de la peinture ou de l'émail du côté deuxième face principale, par exemple à des fins décoratives.

La transparence du revêtement de protection est ici prise au sens large, impliquant une vision au travers, le revêtement de protection pouvant être incolore ou teintée, couleur neutre ou couleur vive. Le revêtement de protection peut être ajusté en fonction de la couleur de la peinture ou de l'émail utilisé à des fins décoratives, pour un complément de couleur.

Ce revêtement de protection peut être teinté par nature (de la matrice) et/ou par exemple par ajout d'additifs colorants, peut contenir comme un colloïde de métal, d'oxyde métallique ou de sel métallique. Comme sol-gel de silice coloré, on peut citer les exemples du document WO2013/054041.

Par simplicité, on peut préférer un revêtement de protection sans additifs ou charges, ou plus largement sans (nano)particules.

La peinture ou l'émail est généralement opaque (transmission lumineuse TL très faible et même nulle) .

La transparence du revêtement de protection peut permettre aussi de préserver tout simplement la vision au travers du vitrage lumineux, par transparence dans une zone donnée (ou plusieurs) dépourvue du premier revêtement opaque (revêtement alors discontinu) et généralement également dépourvue des moyens d'extraction, par exemple un clair de vitre,.

Le premier revêtement, notamment la peinture, peut alternativement laisser passer plus de lumière par exemple appliquée en couche fine et/ou en ajustant le taux de charges dans le liant.

La transparence du revêtement de protection peut permettre de l'appliquer directement sur la première face dans une zone donnée (ou plusieurs) :
- dépourvues du premier revêtement opaque (revêtement alors discontinu) et pourvues des moyens d'extraction au-dessus du revêtement de protection
- avec un premier revêtement (au moins dans cette zone) laissant passer la lumière.

Alors de préférence le revêtement de protection est choisi d'indice de réfraction n3 à 550nm (mieux dans l'ensemble du spectre visible) tel que l'écart n3-n1, en valeur absolue ou non (notamment avec n3>n1), est inférieur à 0,1 mieux d'au plus 0,05.

Le vitrage peut avoir une zone transparente majoritaire en surface, centrale (clair de vitre) ou périphérique :
- adjacente (à côté) et même contiguë (jointive) à une zone dite lumineuse avec les moyens d'extraction, ou entre deux zones lumineuses (latérales, longitudinales) ou même entourée d'une zone lumineuse, comme un cadre, (continue ou ensemble de motifs discrets),
- et/ou adjacente et même contiguë une zone décorative et/ou de masquage avec le premier revêtement (sur l'isolateur optique protégé), entre deux zones décorative et/ou de masquage (latérales, longitudinales etc) même entourée d'une zone décorative et/ou de masquage (continue ou ensemble de motifs discrets).

Le vitrage lumineux peut avoir une zone miroir majoritaire en surface, de préférence centrale :
- adjacente et même contiguë à une zone dite lumineuse avec les moyens d'extraction, ou entre deux zones lumineuses (latérales, longitudinales) ou même entourée d'une zone lumineuse, comme un cadre, (continue ou ensemble de motifs discrets),
- et/ou adjacente et même contiguë une zone décorative et/ou de masquage avec le premier revêtement (sur l'isolateur optique protégé), entre deux zones décorative et/ou de masquage (latérales, longitudinales etc) même entourée d'une zone décorative et/ou de masquage (continue ou ensemble de motifs discrets), de préférence périphérique.

Le revêtement de protection couvre de préférence toute la surface de la couche de silice poreuse par simplicité et même le cas échéant une ou des aires (ou même toutes les aires) sans premier revêtement.

L'ensemble premier substrat verrier, couche de silice poreuse et revêtement de protection peut présenter une transmission lumineuse TL d'au moins 70%, 80% et même d'au moins 90%, notamment pour une épaisseur de 4mm voire de 2mm. TL est mesurée selon la norme EN410 avec un illuminant D65.

L'émail comme la peinture présente donc une première surface principale, surface interne, en contact avec le revêtement de protection et une deuxième surface principale, surface externe, opposée à la première surface (donc plus éloignée du premier substrat verrier) qui est de préférence une surface, par exemple après installation :
- libre, est en regard d'une paroi opaque, notamment espacée d'au plus 1cm et fixée par des moyens mécaniques (vis, écrou, clip etc),
- libre, est en regard d'une paroi vitrée d'un bâtiment (mur, cloison, plafond, toit) ou même d'un véhicule ou

- visible voire même accessible (au toucher),
- revêtue d'une colle pour être fixée à une paroi (carrelage mural etc), en périphérie ou répartie sur cette surface.

Pour une simplicité de réalisation, le vitrage lumineux peut comprendre un seul substrat verrier en verre minéral et même être dénué de substrat verrier en verre organique, rigide ou semi-rigide voire même souple, notamment polycarbonate PC, polyméthacrylate de méthyle PMMA, poly(téréphtalate d'éthylène) PET.

Dans certaines applications le feuilletage est requis, feuilletage avec un deuxième substrat verrier en verre minéral, par exemple pour une cloison vitrée feuilletée, une porte vitrée d'entrée feuilletée, un vitrage feuilleté de véhicule (en particulier toit, pare-brise et même vitre latérale), véhicule terrestre (automobile, camion, train, car, bus) ou maritime.

Aussi, la deuxième surface du premier revêtement peut être en contact avec un intercalaire de feuilletage -qui peut être transparent, clair, extraclair ou même teinté ou diffusant - avec un deuxième substrat verrier (souple, rigide ou semi rigide) de préférence en verre minéral qui peut être clair, extraclair ou même teinté ou diffusant.

Le deuxième substrat verrier peut aussi être en verre organique notamment souple comme :
- un PET de préférence feuilleté avec PVB ou EVA, PET fonctionnel (teinté, diffusant),
- ou un PE éventuellement avec une couche « dure « telle qu'un siloxane,
- ou encore un PU thermodurcissable feuilleté avec un intercalaire thermoplastique PU comme décrit dans le document EP132198.

Dans ce vitrage feuilleté, on peut avoir le système suivant : (isolateur optique/revêtement de protection) /premier revêtement/ premier intercalaire de feuilletage/ support tel que PET/ première électrode/ système optique électrocommandable /deuxième électrode/ support tel que PET/ autre intercalaire de feuilletage/deuxième substrat verrier.

Dans un vitrage feuilleté, on peut avoir le système suivant : (premier revêtement/ revêtement de protection/ isolateur optique/premier substrat verrier/ premier intercalaire de feuilletage/ support tel que PET/ première électrode/ système optique électrocommandable (cristaux liquides de préférence)/deuxième électrode/ support tel que PET/ autre intercalaire de feuilletage/deuxième substrat verrier.

Le système optique électrocommandable à cristaux liquides peut occuper toute ou partie de la surface du vitrage lumineux. Il peut éventuellement faire partie ou former les moyens d'extraction de lumière.

Comme système optique électrocommandable on peut citer : cristaux liquides (de préférence), valve optique (SPD), électrochrome, ou même un thermochrome ou thermotrope. On peut citer les cristaux liquides décrits dans les demandes EP964288, EP0823653A1, EP0825478A1, EP0964288A3, EP1405131.

Le premier revêtement peut être discontinu. Dans ce cas on préfère que le premier revêtement soit en périphérie et éventuellement localement au centre dans une zone transparente (clair de vitre).

Le vitrage lumineux peut être feuilleté par sa deuxième face avec un intercalaire de feuilletage avec un deuxième substrat verrier en verre minéral, clair, extraclair. L'intercalaire de feuilletage peut être transparent, clair, extraclair, diffusant en volume plutôt qu'en surface ou porteuse d'une couche diffusante (encre, couche imprimée) pour former (tout ou partie) des moyens d'extraction -.

Dans cette dernière configuration de feuilletage, le guidage se fait dans l'ensemble premier substrat/intercalaire de feuilletage/deuxième substrat la source de lumière peut être couplée optiquement au premier substrat verrier et au deuxième substrat verrier en étant éventuellement (tout ou partie) en regard de la tranche du deuxième substrat verrier. D'ailleurs, les moyens d'extraction peuvent être sur l'intercalaire de feuilletage et/ou le deuxième substrat.

Comme un intercalaire de feuilletage (avec la première face ou la deuxième face), on peut choisir notamment une ou plusieurs feuilles de matière thermoplastique, par exemple en polyvinylbutyral (PVB) notamment pour un vitrage de véhicule, en éthylène vinylacétate (EVA), en polyuréthane (PU), ou être en résine pluri ou mono-composants réticulable thermiquement (époxy, PU) ou aux ultraviolets (époxy, résine acrylique), notamment intercalaire de feuilletage submillimétrique, en particulier de 0,38mm ou 0.76mm.

Le vitrage lumineux, de préférence monolithique (notamment un seul verre minéral) ou feuilleté (avec verre minéral ou organique), peut faire partie d'un double ou triple vitrage, comme une fenêtre de bâtiment ou de véhicule (train, par exemple en vitrage latéral etc) ou une porte de bâtiment ou de véhicule (train etc).

On préfère dans ce cas laisser une zone transparente (sans ledit premier revêtement ou en motif(s)) sur la plupart du vitrage lumineux de préférence monolithique, en particulier zone centrale (clair de vitre) avec éventuel motif(s) (local) d'extraction. On préfère aussi placer le vitrage lumineux du côté intérieur du bâtiment ou du véhicule.

Le vitrage lumineux peut même faire partie d'un double vitrage d'une porte d'équipement réfrigéré (professionnel), notamment vertical. On préfère dans ce cas laisser une zone transparente (notamment sans ledit premier revêtement ou en motif(s)) de préférence sur la plupart du vitrage lumineux de préférence monolithique avec un éventuel motif(s) (local) d'extraction. Le vitrage lumineux peut être le plus extérieur du double vitrage de l'équipement réfrigéré.

Le premier revêtement peut être :
- à fonction décorative (en un ou plusieurs motifs de forme et/ou de couleur distinctes, jointifs ou espacés)
- et/ou fonctionnelle par exemple :
   - avec un ou des motifs de signalisation et/ou à visée commerciale (LOGO etc) de forme et/ou de couleur distinctes, jointifs ou espacés
   - et/ou de masquage d'un élément plus éloigné de la deuxième surface principale en contact ou espacé du premier revêtement
   - et/ou pour séparer, préserver l'intimité entre deux espaces : cloison vitrée, porte ou fenêtre vitrée d'un réfrigérateur domestique.

Par simplicité de fabrication, le revêtement de protection peut être présent même dans la ou les zones dépourvues du premier revêtement, par exemple être une couche s'étendant sensiblement sur toute la première face principale, ou sur au moins 80% ou au moins 90%.

Par simplicité de fabrication, l'isolateur optique (avec la couche de silice poreuse) peut être présent même dans la ou les zones dépourvues du premier revêtement, par exemple être une couche s'étendant sensiblement sur toute la première face principale, ou sur au moins 80% ou au moins 90% à l'exception le cas échéant de zone(s) avec les moyens d'extraction sur la première face principale.

Le revêtement de protection peut comprendre, mieux est constitué d'un nitrure, un oxyde, un oxynitrure de préférence d'un des éléments suivants : Si, Ti, Zr, Al, ou encore d'un des éléments suivants W, Sb, Hf, Ta, V, Mg, Mn, Co, Ni, Sn, Zn, Ce.

On ajuste l'épaisseur du revêtement de protection pour qu'il remplisse sa fonction de protection en fonction de sa nature, et, indirectement, en fonction de sa densité.

De manière avantageuse, le revêtement de protection comprend, mieux est constitué d'une couche de silice (dense) avec une épaisseur e3 supérieure à 50nm, même d'au moins 60nm ou encore d'au moins 80nm ou d'au moins 100nm et un indice de réfraction n3, à 550nm et même de préférence dans tout le visible, d'au moins 1,4 et même d'au moins 1,42 même d'au moins 1,44.

Le choix de n3 révèle que le revêtement de protection est dense. Il est dénuée de pores traversants (de taille égale à e3 ou de l'ordre de e3 soit taille /e3 entre 1 et 2) et même on peut considérer qu'il est essentiellement dénué de pores à tout le moins avec une fraction volumique inférieure à 10%, mieux à 5%.

La couche de silice dense comporte une phase solide (essentiellement) continue, plutôt qu'une phase solide principalement sous forme de (nano)particules ou de cristallites.

Une couche de silice dense (notamment non rendue poreuse de manière intentionnelle) présente de manière classique un indice de réfraction à 550nm de l'ordre de 1,45 si déposée par dépôt physique en phase vapeur et entre 1,42 et 1,46 si obtenue par voie sol gel.

Lors d'essais, la Demanderesse a constaté qu'avec une épaisseur inférieure à 50nm la barrière aux polluants de la couche de silice poreuse était insuffisante tout particulièrement pour un premier revêtement qui est une peinture.

Les pertes optiques sont diminuées progressivement au-delà de 50nm. A partir de 80nm on constate une amélioration significative du guidage.

La couche poreuse peut être un empilement compact de nanoparticules de silice, par exemple obtenue par voie sol-gel, ou de préférence, une couche de silice comportant une matrice de silice (autrement appelée réseau de silice) contenant des pores et de préférence obtenue par voie sol-gel. On préfère tout particulièrement une couche poreuse comportant une phase solide (essentiellement) continue, formant ainsi les murs denses des pores, plutôt qu'une phase solide principalement sous forme de (nano)particules ou de cristallites.

Pour fabriquer la couche sol gel de silice poreuse, il existe différents agents porogènes. Le document EP1329433 divulgue ainsi une couche de silice poreuse élaborée à partir d'un sol de tétraéthoxysilane (TEOS) hydrolysé en milieu acide avec un agent porogène à base de polyéthylène glycol tert phényle éther (dit Triton) à une concentration entre 5 et 50g/l. La combustion de cet agent porogène à 500°C libère les pores. Cet agent porogène non localisé est de forme indéterminée et se répand dans la structure de façon incontrôlée.

D'autres agents porogènes connus tels que des micelles de molécules tensioactives cationiques en solution et, éventuellement, sous forme hydrolysée, ou de tensioactifs anioniques, non ioniques, ou des molécules amphiphiles, par exemple des copolymères blocs. De tels agents génèrent des pores sous forme de canaux de petite largeur ou des pores plus ou moins ronds de petite taille entre 2 et 5nm.

On préfère une couche poreuse obtenue avec un agent porogène particulaire comme des billes polymériques qui permet quant à lui une meilleure maîtrise de la taille des pores, notamment l'accès à des grandes tailles, une meilleure maîtrise de l'organisation des pores notamment une distribution homogène, ainsi qu'une meilleure maîtrise du taux de pores dans la couche et une meilleure reproductibilité. Les billes polymériques peuvent être un coeur polymérique et une écorce minérale

La plus petite dimension caractéristique des pores peut être encore plus préférentiellement supérieure ou égale à 30nm et de préférence inférieure à 120nm mieux à 100nm. Et de préférence également, la plus grande dimension caractéristique des pores peut être encore plus préférentiellement supérieure ou égale à 30nm et de préférence inférieure à 120nm mieux à 100nm.

Le facteur de forme plus grande dimension divisé par plus petite dimension peut être inférieur à 2 et même à 1,5.

Dans un mode de réalisation préféré, la couche de silice poreuse est une matrice de silice avec des pores fermés (de préférence délimités par les parois de la silice) en volume, et en particulier une porosité ouverte en surface, notamment pores fermés de forme sensiblement ovale ou sensiblement sphérique, chacun de plus petite dimension d'au moins 30nm et de plus grande dimension d'au plus 120nm,de préférence entre 75nm et 100nm (en incluant les bornes de préférence), le revêtement de protection comprend une couche avec une épaisseur e3 supérieure à la plus grande dimension des pores et de préférence submicronique.

La couche poreuse à pores fermés en volume est mécaniquement stable, elle ne s'effondre pas même pour des fortes concentrations de pores. Les pores peuvent être aisément séparés les uns des autres, bien individualisés.

Les pores peuvent avoir une forme allongée, notamment en grain de riz. Encore plus préférentiellement, les pores peuvent avoir une forme sensiblement sphérique ou ovale. On préfère que la majorité des pores fermés, voire au moins 80% d'entre eux, aient une forme donnée sensiblement identique, notamment allongée, sensiblement sphérique ou ovale.

La majorité des pores fermés, (voire entre 80% ou même 95% ou mieux tous), peuvent avoir de préférence une plus petite dimension caractéristique, et de préférence une plus grande dimension également, entre 75 et 100nm (bornes comprises de préférence).

Dans la couche poreuse, les pores peuvent être de dimensions différentes, bien que ce ne soit pas préféré.

La porosité peut être en outre monodisperse en taille, la taille des pores étant alors calibrée à une valeur minimale de 30nm, de préférence 40nm encore plus préférentiellement 50 nm et de préférence inférieure à 120nm.

La proportion en volume de pores peut être de préférence supérieure à 50% et même à 65% et de préférence inférieure à 85%.

Il doit être noté cependant que la fraction volumique maximale de 74% est la valeur maximale théorique appliquée à un empilement de sphères de dimension identique, quelle qu'elle soit.

Le premier revêtement peut être en regard des moyens d'extraction (donc de la zone lumineuse), notamment associés à la deuxième face principale, et suffisamment absorbant, opaque pour ne pas voir de la lumière du côté de la première face principale, un halo lumineux.

La couche de silice poreuse, notamment couvrant la majorité et même au moins 80% ou au moins 90% de la première face principale, présente au moins une discontinuité, notamment de largeur au moins centimétrique.

Dans une première réalisation, la couche de silice poreuse couvre partiellement la première face, présentant ainsi une première zone dite d'isolation optique comportant en outre le revêtement de protection et le premier revêtement continu ou discontinu, première zone d'isolation optique de préférence plus proche de la source de lumière que les moyens d'extraction et une zone adjacente et de préférence contigüe à la première zone d'isolation optique comporte les moyens d'extraction, notamment formés par le premier revêtement, moyens d'extraction directement sur la première face principale ou directement sur le revêtement de protection alors directement sur la première face principale et de préférence d'indice de réfraction n'3 à 550nm de préférence tel que n1-n'3 (en valeur absolue ou non) soit inférieur à 0,1 et même à 0,05. On peut préférer n'3>n1.

Dans la discontinuité les moyens d'extraction (tout ou partie des moyens d'extraction), sont formés par le premier revêtement de préférence couvrant la majorité et même au moins 80% ou au moins 90% de la première face principale.

Les moyens d'extraction sont éventuellement une couche diffusante suffisamment épaisse ou sous une surcouche opaque sur les moyens d'extraction pour que la lumière ne traverse pas ou ne forme pas halo lumineux, surcouche qui peut être en matière identique ou distincte du premier revêtement ou de la couche diffusante

Eventuellement la couche de silice poreuse est discontinue présentant ainsi une deuxième zone dite d'isolation optique comportant en outre le revêtement de protection et le premier revêtement continu ou discontinu deuxième zone dite d'isolation optique, la zone d'extraction étant entre la première et la deuxième zone d'isolation optique notamment adjacente et même contigüe à la première et la deuxième zone d'isolation optique

Dans une réalisation, la couche de silice poreuse couvre partiellement la première face et est discontinue, présentant ainsi une première zone dite d'isolation optique comportant en outre le revêtement de protection et le premier revêtement continu ou discontinu, première zone d'isolation optique de préférence plus proche de la source de lumière que les moyens d'extraction et présentant ainsi une deuxième zone dite d'isolation optique comportant en outre le revêtement de protection et le premier revêtement continu ou discontinu. Une zone dite d'extraction comporte les moyens d'extraction est entre la première et la deuxième zone d'isolation optique de préférence adjacente et même contigüe à la première et la deuxième zone d'isolation optique.

Et les moyens d'extraction sont formés par le premier revêtement, moyens d'extraction directement sur la première face principale ou directement sur le revêtement de protection qui est alors directement sur la première face principale et même d'indice de réfraction n'3 à 550nm tel que n1-n'3 (en valeur absolue ou non) soit inférieur à 0,1 et même à 0,05. On peut préférer n'3>n1.

Dans une réalisation, typiquement dans le cas d'une pluralité de discontinuités ou d'une large discontinuité, la couche de silice poreuse, notamment couvrant la majorité et même au moins 80% ou même au moins 90% de la première face principale, présente au moins une discontinuité notamment de largeur au moins centimétrique. La couche de silice poreuse présente ainsi au moins une première zone dite d'isolation optique et une deuxième zone dite d'isolation optique séparées par la discontinuité, première et deuxième zones disjointes ou interconnectées.

Dans une réalisation, la couche de silice poreuse est discontinue, présentant ainsi au moins un première zone dite d'isolation optique et une deuxième zone dite d'isolation optique séparées par une zone de discontinuité, le revêtement de protection et le premier revêtement continu ou discontinu sont présents dans la première zone d'isolation optique, de préférence plus proche de la source de lumière que les moyens d'extraction et:
- la zone de discontinuité comporte, et de préférence forme, une zone de transparence, de préférence plus centrale que la première zone d'isolation optique, les moyens d'extraction étant en regard ou décalés de la zone de discontinuité, notamment de surface supérieure à une zone lumineuse formée par les moyens d'extractions et/ou à la première zone d'isolation optique,
- et/ou la zone de discontinuité comporte et de préférence étant formée d'une couche (mono ou multicouche) formant un miroir ou un miroir espion, de préférence zone plus centrale que la première zone d'isolation optique directement sur la première face principale, couche miroir éventuellement avec une surcouche (de protection ou de masquage arrière) formée par le premier revêtement notamment réparti sur toute la première face avec des discontinuités ou même pleine couche couvrant sensiblement la première face.

Des exemples de couches formant miroir espion sont décrits dans le brevet WO2012/035258.

Dans une réalisation, la couche de silice poreuse, le revêtement de protection et le premier revêtement s'étendent sur une portion de la première face principale par exemple d'au plus 20% même d'au plus 10% du premier substrat. En outre, les moyens d'extraction (une surface ou surface cumulée de toutes les zones d'extraction disjointes) peuvent s'étendre sur une portion du vitrage lumineux par exemple d'au plus 40% même d'au plus 30% ou d'au plus 20% du vitrage.

Dans une réalisation, la couche de silice poreuse, le revêtement de protection et le premier revêtement continu ou discontinu s'étendent sur une portion de la première face principale notamment sur une portion sur et en périphérie de la première face principale dite bordure d'isolation optique, ladite portion ou bordure étant du côté du couplage optique avec la source de lumière et à côté de la portion ou bordure est présente une zone de transparence et/ou une zone avec les moyens d'extraction de lumière.

Par exemple avec un clair de vitre comportant un motif (local) d'extraction de lumière (décor ou signalisation en lumière continue ou clignotante), ils couvrent une portion sur et en périphérie de la première face principale, ladite portion (bordure) étant du côté du couplage optique avec la source de lumière voire forme un cadre sur et en périphérie de la première face. Les moyens d'extraction peuvent être du côté (directement sur) de la première face qui après montage du vitrage lumineux n'est pas aisément accessible de préférence.

Cette portion périphérique est par exemple large d'au plus 10cm, le long de la tranche de couplage et le long d'un ou des autres tranches. Il s'agit par exemple d'un émail noir en bande pleine ou sous forme de motifs, notamment avec une décroissance de la taille des motifs en s'éloignant de la (chaque) tranche, émail utilisé dans une porte vitrée d'équipement réfrigéré par exemple.

La peinture, de préférence une laque, est par exemple à base de résines PU à isocyanate bloqué, avec une réticulation à environ 170°C quelques minutes, et avec des matières minérales (pigments et charges) notamment à hauteur de 55% en masse. D'autres peintures utilisent des systèmes bi composant sans cuisson. L'épaisseur sèche est souvent entre 30 et 60µm et peut varier suivant les teintes.

Le premier revêtement peut être une laque telle que décrite dans la demande GB2412929 ou encore WO2009/081077.

La laque du premier revêtement selon l'invention comprend de préférence comme liant une résine synthétique, sous forme liquide avant dépôt et adaptée au séchage en four.

Le liant est avantageusement une résine polyuréthane, obtenue par réticulation, par un isocyanate ou un polyisocyanate, de résines hydroxylées, notamment des résines polyesters ou polyéthers, ou de préférence des résines acryliques (ou polyacrylates), lesquelles présentent une résistance aux rayonnements ultraviolets élevée. Dans ce cas, la résine acrylique hydroxylée est de préférence issue de la polymérisation d'un styrène acrylique, tandis que l'isocyanate (ou polyisocyanate) ne comporte avantageusement pas de groupement du type aromatique. Cette combinaison particulière permet notamment d'obtenir de faibles perméabilités, de bonnes propriétés mécaniques (par exemple en terme de résistance à la rayure), et une résistance élevée au rayonnement ultraviolet.

La laque peut comprendre un liant à base de résine acrylique, notamment réticulée avec de la mélamine et/ou un isocyanate.

Le liant de la laque du premier revêtement selon l'invention peut également contenir ou être à base de résine(s) alkyde(s), obtenues par réaction chimique entre au moins un polyol, au moins un polyacide et au moins un acide gras ou une huile. Ces alkydes sont de préférence courtes en huile, c'est-à-dire que la teneur pondérale en huile ou acide gras dans la résine est de préférence inférieure ou égale à 40%. Les polyols peuvent être par exemple des composés du glycérol ou du pentaérithritol. Les polyacides peuvent être à base d'anhydride phtalique. Les huiles peuvent être siccatives (telles que l'huile de lin, de bois ou de chine), semi-siccatives (telles que l'huile de soja, de tall, de carthame ou de ricin déshydraté), ou encore non siccatives (comme l'huile de coprah ou de ricin). Afin d'améliorer leurs propriétés de résistance à l'eau, les liants alkydes peuvent également être modifiés par des monomères tels que le styrène, le vinyltoluène ou des acrylates ou par des résines phénoliques ou époxydiques. Des résines alkydes aminoplastes réticulant sous l'effet de la chaleur sont des liants particulièrement avantageux de la laque du premier revêtement selon l'invention. Le réticulant aminoplaste est de préférence une résine urée-formol ou mélamine-formol, qui confèrent une bonne résistance à l'eau, notamment lorsqu'elles sont apportées à raison de 20 à 30% en masse par rapport au liant alkyde sec.

La laque peut également comprendre un liant à base de résine acrylique thermodurcissable, par exemple obtenue par réticulation d'une résine acrylique carboxylée par une résine époxydique, formo-phénolique ou mélamine-formol, d'une résine acrylique à fonction carboxamide par un liant époxydique ou alkyde, ou encore d'une résine acrylique à fonction époxydique par des acides ou des polyamines.

Le premier revêtement qui est une peinture peut être pourvue d'une sous couche promotrice d'adhésion, encore appelée primaire d'adhésion, transparent, située entre le revêtement de protection et la peinture et dont la fonction est d'améliorer l'adhésion. Cette sous-couche est de préférence à base de silanes qui permettent d'éviter les risques de décollement dus à l'humidité. Des agents promoteurs d'adhésion, comme des silanes, peuvent également être dispersés dans la peinture.

Aussi, dans une configuration, un agent promoteur d'adhésion, notamment à base de silanes, est présent, sous forme de couche interposée entre la peinture et le revêtement de protection et/ou entre la peinture et une feuille intercalaire polymère (feuilletage avec deuxième substrat verrier comme déjà décrit), et/ou dispersé dans la peinture.

Afin d'optimiser l'adhésion entre la peinture et une éventuelle feuille intercalaire polymère, on soumet de préférence la peinture à l'action d'un plasma, notamment par un traitement du type décharge couronne, avant traitement thermique. Dans le même but, il est également possible de déposer sur la peinture des silanes, par exemple par pulvérisation ou chiffonnage. Ces traitements permettent d'utiliser des peintures, notamment des laques, dont l'adhésion avec les feuilles intercalaires polymères est naturellement faible. Ils génèrent néanmoins un surcoût et ne sont de ce fait pas préférés.

La laque comprend avantageusement des pigments, minéraux et/ou organiques, de préférence minéraux, afin de conférer les propriétés esthétiques voulues. Ces pigments sont de préférence du type résistant au rayonnement ultraviolet et à l'humidité. Parmi les pigments employés, on trouve par exemple des oxydes de titane ou de zirconium éventuellement dopés par des ions d'éléments de transition, ou encore des oxydes mixtes du type zircon (ZrSiO₄). Les pigments sont de préférence exempts de métaux lourds tels que le cadmium ou le plomb.

La laque peut également contenir des charges minérales destinées à optimiser ses paramètres physico-chimiques, par exemple sa viscosité. La teneur totale en espèces minérales (pigments et charges) de la laque est de préférence, exprimée en pourcentage massique, comprise entre 40 et 70%, voire entre 50 et 60%.

La laque du premier revêtement selon l'invention peut être déposée avec tout type de procédé connu de l'homme du métier, comme le rideau, la pulvérisation pneumatique, la sérigraphie ou le « roll-coating ». Le procédé de sérigraphie présente l'avantage de pouvoir ne revêtir qu'une partie du premier substrat sans masquage.

Le procédé de roll-coating consiste à faire passer le premier substrat (avec l'isolateur optique et le revêtement de protection) entre deux rouleaux, dont l'un (en général le rouleau supérieur) est enduit de laque. Pour des raisons de coût, le procédé employé est de préférence le rideau dans lequel on crée un écoulement de laque sur une ligne sensiblement perpendiculaire à la direction de défilement des substrats, permettant ainsi de revêtir toute la surface desdits substrats (déjà avec l'isolateur optique et le revêtement de protection). Le débit de laque et la vitesse de défilement du substrat sont réglés de manière à obtenir un dépôt de l'épaisseur désirée, de préférence 100 à 200µm à l'état humide. Le premier substrat (avec l'isolateur optique et le revêtement de protection) et revêtu de la laque est ensuite soumis à un traitement thermique permettant de durcir la laque, plus précisément d'évacuer le solvant et d'effectuer les réactions de polymérisation et/ou de réticulation des résines employées comme liant. La température employée est de préférence comprise entre 50 et 250°C, notamment entre 100 et 200°C afin de conférer à la laque un degré de réticulation apte à diminuer sa perméabilité à l'eau. L'épaisseur de la couche de laque après durcissement est de préférence comprise entre 20 et 100µm, notamment entre 40 et 70µm afin d'obtenir l'opacité désirée.

L'émail du premier revêtement peut être de n'importe quelle couleur et comporte de la fritte de verre fondue et d'autres matières notamment minérales (pigments, charges etc).

Les moyens d'extraction forment une ou plusieurs motifs ou zones lumineuses.

La ou les zones lumineuses peuvent être :
- à fonction décorative, lumière d'ambiance (en un ou plusieurs motifs de forme et/ou de couleur distinctes, jointifs ou espacés)
   et/ou
- fournir un éclairage architectural
- fournir un éclairage directionnel (moyens d'extraction concentrateur de lumière)
- avec un ou des motifs de signalisation et/ou à visée commerciale (LOGO etc) de forme et/ou de couleur distinctes, jointifs ou espacés

Pour l'extraction de la lumière on emploie des moyens de diffusion, formés soit par un traitement superficiel du verre du type sablage, attaque acide, dépôt d'émail ou de pâte diffusante, soit par un traitement dans la masse du verre de type gravure laser.

Les moyens d'extraction diffusants sont sous forme d'une texturation de surface, notamment de la première ou de la deuxième face, ou d'une couche diffusante notamment un émail, une peinture, une encre (blanc de préférence ou autre en fonctions des zones, des besoins) ou encore un sticker diffusant (amovible).

Un produit (intermédiaire) correspondant au vitrage lumineux selon l'invention sans les moyens d'extraction de lumière peut être vendu à l'utilisateur ou client final lequel peut lui-même réaliser les moyens d'extraction de lumière, notamment effaçables ou amovibles, de préférence sur la deuxième face (surtout lorsque le premier revêtement couvre la première face); par exemple par un sticker ou encore un stylo marqueur adapté.

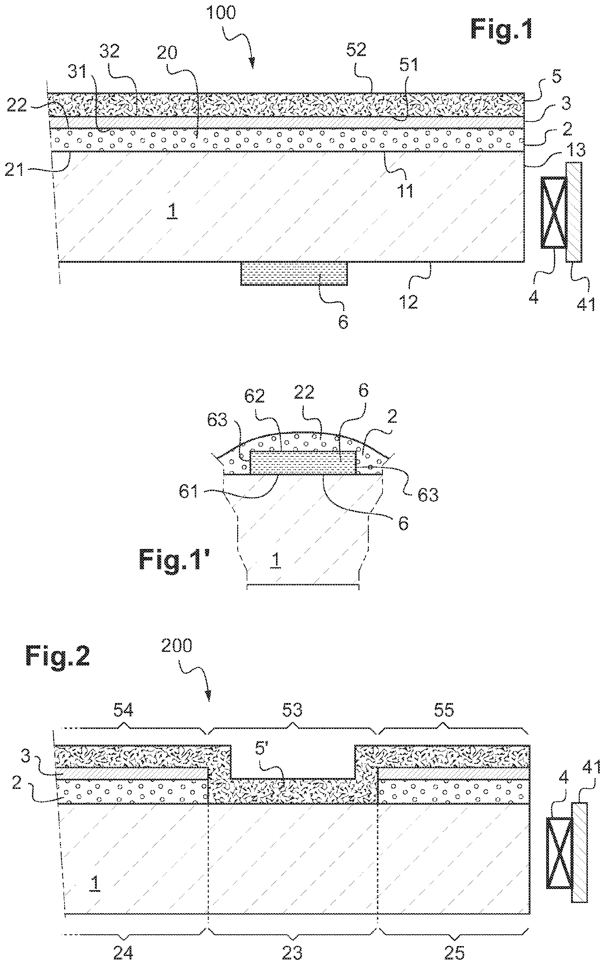

Les moyens d'extraction peuvent former un concentrateur de lumière (émission de lumière dirigée) par exemple
- moyen réfléchissant en regard de moyen d'extraction pour réfléchir les rayons extraits selon une direction donnée comme décrit dans FR2989176,
- lentille comme décrit dans le document WO2005/018283,
- premier substrat verrier en biseau notamment avec un angle aigu inférieur ou égal à 45°, décrit dans le document FR2987043 (notamment exemple en figure 2) avec réflecteur qui est une surface réfléchissante et/ou polie.

Les moyens d'extraction (tout ou partie) peuvent être du côté de la deuxième face principale notamment plutôt que sous la couche de silice poreuse occupant sensiblement toute la première face principale.

Selon une caractéristique, une couche diffusante, notamment le premier revêtement ou un autre émail, est blanche en présentant une clarté L* d'au moins 50 et fait partie ou forme les moyens d'extraction. La couleur est définie de manière connue par les paramètres L*, a* et b* est mesurée par un spectrocolorimètre.

En cas de couche diffusante sur la première face, la couche de silice poreuse peut être déposée uniquement adjacente et même contigüe à la couche diffusante (de part et d'autre) ou bien recouvrir également la couche diffusante ou même une zone dépolie.

La couche diffusante qui est sur la première face, est de préférence avec un facteur de réflexion diffuse supérieur ou égal à 50%, voire à 80%.

La couche diffusante qui est sur la deuxième face, de préférence est de facteur de transmission diffuse supérieur ou égal à 50%, voire à 80%.

La couche diffusante peut être un ensemble de motifs diffusants qualifié de réseau diffusant tout particulièrement pour une zone lumineuse de grande taille souhaitée la plus uniforme possible.

Ce réseau diffusant ou rétrodiffusant peut donc être formé de motifs diffusants par exemple de largeur (moyenne) de 0,2mm à 2mm, préférentiellement inférieure à 1mm et d'épaisseur micronique par exemple de 5 à 10µm. L' espacement (moyen) entre les motifs peut être 0,2 à 5mm. Pour former ce réseau on peut texturer une couche.

Dans la ou les zones lumineuses (du côté opposé à la face avec moyen d'extraction tel que l'émail et/ou du côté de la face avec moyen d'extraction tel que l'émail), l'éclairage peut être du type lambertien et non directionnel, suivant un axe de propagation de la lumière. Ainsi, la luminance a l'avantage d'être sensiblement égale quel que soit l'angle d'observation.

De préférence, le premier substrat verrier revêtu des moyens d'extraction, notamment émail, présente une transmission lumineuse inférieure à 45% voire à 40% ou même à 35%.

Les moyens d'extraction, notamment émail, s'étendent, par exemple sur la totalité d'une face du premier substrat, de manière discontinue ou selon des formes géométriques éparses aux lignes courbes et/ou droites. L'émail est par exemple à géométrie fractale.

Selon une autre caractéristique, les moyens d'extraction s'étendent de manière discontinue et délimite des zones sombres notamment des motifs de formes géométriques éparses aux lignes courbes et/ou droites, notamment de longueur (plus grande dimension) au moins centimétrique.

La zone lumineuse peut couvrir une partie de la surface, laisser ainsi au moins une première zone sombre, c'est-à-dire non lumineuse peut couvrir une partie de la surface, laisser ainsi au moins une première zone, zone sombre qui est choisie parmi une zone transparente (clair de vitre...) ou une zone décorative par un revêtement opaque et/ou coloré tel que le premier revêtement, ou encore une zone réfléchissante notamment miroir par exemple formée par une argenture couverte par une peinture de protection à l'oxydation,

Le miroir est par exemple le produit SGG Miralite de la société SAINT-GOBAIN GLASS, avec une peinture de protection à l'oxydation, l'argenture du miroir étant disposée sur la même face que le premier revêtement et/ou les moyens d'extraction (émail, peinture) sur une face opposée. En variante, le miroir est à base de chrome tel que le produit SGG Mirastar de la société SAINT-GOBAIN GLASS, le chrome étant sur la face du verre porteuse du le premier revêtement et/ou des moyens d'extraction (émail, peinture) ou la face opposée.

La largeur maximale, la largeur correspondant à la plus petite dimension surfacique de cette zone lumineuse (de toute forme possible), peut être de préférence inférieure à 200 mm voire inférieure ou égale à 100 mm, notamment pour laisser une surface de zone sombre importante. La largeur est constante ou variable.

La zone lumineuse peut être une zone périphérique, notamment le long d'au moins un bord, selon par exemple au moins une bande ou un dessin, tandis que la zone sombre est davantage centrale (et plus éloignée de la source de lumière).

La couche diffusante (tout ou partie des moyens d'extraction), notamment émail, peut être une couche continue en surface, de largeur inférieure à 200 mm, voire à 100 mm et encore plus préférentiellement inférieure ou égale à 50 mm, ou être discontinue et formée d'un ensemble de motifs fins, de largeur (dimension minimale du motif) inférieure à 200 mm, voire à 100 mm et encore plus préférentiellement inférieure ou égale à 50 mm.

Les motifs d'extraction, diffusants sont par exemple géométriques : bande rectiligne ou courbée, des ronds concentriques, des L. etc. Les motifs sont identiques ou distincts, parallèle entre eux ou non, avec une distance entre eux identiques ou non.

Dans un mode de réalisation préféré, la couche diffusante (tout ou partie des moyens d'extraction)est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes. Pour l'extraction de la lumière on emploie des moyens de diffusion, formés soit par un traitement superficiel de la feuille de verre du type sablage, attaque acide, dépôt d'émail ou de pâte diffusante, soit par un traitement dans la masse du verre de type gravure laser.

La couche diffusante (tout ou partie des moyens d'extraction) peut être composée d'éléments contenant des particules et un liant, le liant permettant d'agglomérer entre elles les particules. Les particules peuvent être métalliques ou des oxydes métalliques, la taille des particules peut être comprise entre 50 nm et 1 µm, de préférence le liant peut être minéral pour une résistance à la chaleur.

La couche diffusante (tout ou partie des moyens d'extraction) peut être composée d'éléments contenant des particules et un liant, le liant permettant d'agglomérer entre elles les particules. Les particules peuvent être métalliques ou des oxydes métalliques, la taille des particules peut être comprise entre 50 nm et 1 µm, de préférence le liant peut être minéral pour une résistance à la chaleur.

Dans un mode de réalisation préféré, la couche diffusante (tout ou partie des moyens d'extraction)est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante (tout ou partie des moyens d'extraction) d'environ 10 µm.

Avantageusement, une zone lumineuse est un aplat d'émail (donc une zone pleine par opposition à un réseau de motifs ponctuels type points millimétriques) notamment de longueur (plus grande dimension) au moins centimétrique.

Selon une caractéristique, l'émail d'extraction présente la composition suivante
- entre 20 et 60 % en poids de SiO₂,
- 10 à 45 % en poids de pigments réfractaires, notamment de Ti0₂, notamment de taille micronique
- de préférence pas plus de 20 % en poids d'alumine et/ou d'oxyde de zinc.

Les pigments TiO2 rendent l'émail suffisamment opaque (pour visualiser l'émail à l'état off) et abaissent la TL. Des exemples de composition d'émail d'extraction peuvent être l'émail sous la dénomination Ferro 194011 commercialisé par l'entreprise FERRO, la référence AF5000 commercialisé par la société JM, la référence VV30-244-1 commercialisé par Pemco sont très blancs avec une brillance supérieure à 20 et présentent une transmission lumineuse basse, inférieure à 40 %.

Avantageusement, les diodes sont disposées de manière à injecter de la lumière par la tranche de la première feuille de verre selon deux côtés opposés parallèles.

Comme source de lumière on peut choisir une fibre optique extractrice, avec une face émettrice latérale (couplée à une source de lumière primaire qui est typiquement une diode).On utilise par exemple la fibre optique de 3M dite 3M™ Précision Lighting Elements.

On préfère des diodes. Les diodes peuvent être (pré) encapsulées, c'est-à-dire comprenant une puce semi-conductrice et une enveloppe, par exemple en résine type époxy ou en PMMA, encapsulant la puce et dont les fonctions sont multiples : élément diffusant ou de focalisation, conversion de longueur d'onde. L'enveloppe est commune ou individuelle.

Les diodes peuvent être de préférence simples puces semi-conductrices par exemple de taille de l'ordre de la centaine de µm ou du mm. Leur largeur est de préférence inférieure à l'épaisseur du premier substrat verrier surtout si non feuilleté côté deuxième face.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support,
- une diode dont la direction principale d'émission est perpendiculaire ou oblique par rapport la face émettrice de la puce.

Le diagramme d'émission d'une source peut être lambertien.

De préférence la distance entre les puces et la première feuille est inférieure ou égale à 2 mm.

La lumière extraite du motif d'extraction peut clignoter, changer de couleur grâce à des moyens de pilotage de la source de lumière par exemple un ensemble de diodes émettrices de blanc ou encore de rouge, de vert, de bleu et de préférence également de blanc.

Pour une isolation optique tenant compte de l'épaisseur de peau on préfère que :
- lorsque n2 est inférieur ou égal à 1,3, e2 est d'au moins 600nm
- lorsque n2 est inférieur ou égal à 1,25, e2 est d'au moins 500nm
- lorsque n2 est inférieur ou égal à 1,2, e2 est d'au moins 400nm.

Par sécurité on choisit e2 est d'au moins 600nm et même d'au moins 700nm ou encore d'au moins 800nm.

Le premier substrat verrier employé peut être tout type de verre plat, (éventuellement bombé par les procédés de bombage connus de l'homme du métier, lorsqu'il s'agit de revêtir des surfaces courbes). Il peut s'agir de verres monolithiques, c'est-à-dire composés d'une seule feuille de verre, laquelle peut être produite par le procédé « float » permettant d'obtenir une feuille parfaitement plane et lisse, ou par des procédés d'étirage ou de laminage.

A titre d'exemples de matériaux verriers, on peut citer le verre float (ou verre flotté) de composition sodo-calcique classique, éventuellement durci ou trempé par voie thermique ou chimique, un borosilicate d'aluminium ou de sodium ou toute autre composition.

Le verre peut être clair, extra-clair, à très faible teneur en oxyde(s) de fer. Il s'agit par exemple des verres commercialisés dans la gamme « DIAMANT » par SAINT-GOBAIN GLASS.

Le substrat peut être un vitrage en verre silicosodocalcique, notamment extraclair, et le substrat revêtu peut présenter :
- une transmission du rayonnement lumineux supérieure ou égale à 91% voire supérieure ou égale 92% ou même 93% ou 94% à 550 nm ou de préférence sur toute la gamme visible,
- et/ou une réflexion du rayonnement lumineux inférieure ou égale à 7%, voire inférieure ou égale à 4%, à 550 nm ou de préférence sur toute la gamme visible.

La tranche couplée optiquement peut être façonnée, façonnage automobile (arrondi), droit.

Un mode de réalisation préféré dans le cas où le premier revêtement est une laque blanche ou de couleur ivoire consiste à utiliser comme premier substrat verrier un verre extra-clair, c'est-à-dire dont la teneur en oxyde de fer est inférieure à 250ppm, de préférence inférieure ou égale à 200ppm, voire à 150ppm, et dont la transmission lumineuse sous illuminant D65 est supérieure à 89%, notamment 90% pour une épaisseur de 4mm. Il a été trouvé que les propriétés optiques d'un tel verre permettaient d'obtenir un excellent rendu de la couleur blanche ou ivoire de la laque alors que la teinte résiduelle verte des verres clairs courants, dont la teneur en oxyde de fer est de l'ordre de 1000ppm est particulièrement mise en évidence.

L'épaisseur du premier substrat verrier est de préférence comprise entre 2 et 19mm, de préférence d'au plus 10mm, notamment entre 4 et 10mm, plus particulièrement entre 5 et 9mm surtout dans le bâtiment.

Le premier substrat verrier peut être trempé et/ou bombé même après être revêtu.

Le premier substrat verrier avec la couche sol gel et le revêtement de protection peut avoir été traité thermiquement, à une température supérieure ou égale à 450°C de préférence supérieure ou égale à 600°C, notamment est même un verre trempé, bombage trempé.

De préférence, par simplicité, la couche de silice poreuse est une couche sol-gel et le revêtement de protection comprend, mieux est constituée, d'une couche de silice sol-gel plutôt qu'un dépôt physique en phase vapeur PVD notamment magnétron (c'est-à-dire par pulvérisation cathodique assistée par magnétron) de la couche de silice (ou autre oxyde) sont plus onéreux et long du fait du caractère isolant électrique de la silice et compliquant la fabrication.

La silice poreuse et/ou du revêtement de protection peut être minérale ou même hybride minéral organique. La silice peut être dopée. Les éléments dopants peuvent de préférence être choisis parmi Al, Zr, B, Sn, Zn. Le dopant est introduit pour remplacer les atomes de Si dans un pourcentage molaire pouvant de préférence atteindre 10%, encore plus préférentiellement jusqu'à 5%.

Avantageusement, le premier substrat est feuilleté par un intercalaire de feuilletage à un deuxième substrat verrier en verre minéral ou organique, intercalaire de feuilletage soit sur la deuxième face soit sur le premier revêtement et/ou le premier substrat fait partie d'un double ou triple vitrage, vitrage isolant ou sous vide, et de préférence le premier revêtement est une surface libre, éventuellement hors zone d'assemblage et/ou le revêtement de protection est dans une zone avec une surface libre (clair de vitre etc).

A titre d'exemples, le vitrage lumineux est destiné à :
- un vitrage de bâtiment, comme une façade éclairante, une fenêtre éclairante, un plafonnier, une dalle de sol ou murale éclairante, une porte vitrée éclairante, une cloison éclairante, un plafond éclairant, une marche d'escalier, un garde-corps, une balustrade, un comptoir,
- un véhicule de transport, comme une vitre latérale éclairante ou un toit vitré éclairant ou une fenêtre éclairante ou une lunette arrière, une porte vitrée éclairante, notamment de transport de particuliers, tel que automobile, camion, ou en commun, tel que train, métro, tramway, bus ou de véhicule aquatique ou aérien (avion),
- l'éclairage routier ou urbain,
- un vitrage de mobilier urbain, comme une partie vitrée éclairante d'abribus, de balustrade, de présentoir, d'une vitrine, d'une étagère, d'une serre,
- un vitrage d'ameublement intérieur, comme une paroi éclairante de salle de bains, un miroir éclairant, une partie vitrée éclairante d'un meuble,
- une partie vitrée, notamment porte, étagère vitrée, couvercle d'équipement réfrigéré domestique ou professionnel.

L'invention a encore pour objet une cloison notamment feuilleté, porte (encadrée ou non, notamment feuilleté), fenêtre notamment en double ou triple vitrage, tablette ou porte (notamment en double vitrage) d'équipement réfrigéré domestique ou professionnel vitrage d'ameublement, notamment porte de placard, plafond, garde-corps, panneau mural, carrelage mural, marche d'escalier, miroir, comptoir, vitrine incorporant un vitrage lumineux selon l'invention.

La cloison peut être fixe ou sous forme de panneaux coulissants, par exemple montés sur des rails. La porte peut être une porte d'intérieur ou d'extérieur ou encore une porte de douche.

Pour un éclairage de cloison, d'étagère, de vitrine de magasin ou de locaux d'une société, la forme géométrique de la combinaison de l'émail et de la surface vitrée transparente correspondra avantageusement au logo de la société.

Dans un véhicule, on ajuste l'extraction/la conversion des rayonnements (ainsi que le type et/ou la position et/ou le nombre des diodes) pour :
- un éclairage d'ambiance, de lecture, notamment visible à l'intérieur du véhicule,
- une signalisation lumineuse notamment visible à l'extérieur :
   - par activation de télécommande : détection du véhicule dans un parking ou autre, indicateur de (dé)verrouillage de portes, ou
   - signalisation de sécurité, par exemple comme feux stop sur l'arrière,
- un éclairage sensiblement homogène sur toute la surface d'extraction (une ou plusieurs zones d'extraction, fonction commune ou distincte).

La lumière peut être :
- continue et/ou par intermittence,
- monochromatique et/ou plurichromatique.

Visible à l'intérieur du véhicule, elle peut ainsi avoir une fonction d'éclairage de nuit ou d'affichage d'informations de toutes natures, de type dessin, logo, signalisation alphanumérique ou autres signalétiques.

Comme motifs décoratifs, on peut former par exemple une ou des bandes lumineuses, un cadre lumineux périphérique.

On peut réaliser une seule face d'extraction (interne au véhicule de préférence).

L'insertion de diodes dans ces vitrages permet d'autres fonctionnalités de signalisation suivantes :
- affichage de témoins lumineux de signalisation destinés au chauffeur du véhicule ou aux passagers (exemple : témoin d'alarme de température du moteur dans le pare-brise automobile, témoin de mise en fonctionnement du système de dégivrage électrique, des vitres...),
- affichage de témoins lumineux de signalisation destinés aux personnes à l'extérieur du véhicule (exemple : témoin de mise en fonctionnement de l'alarme du véhicule dans les vitres latérales),
- affichage lumineux sur les vitrages des véhicules (par exemple affichage lumineux clignotant sur les véhicules de secours, affichage de sécurité avec faible consommation électrique signalant la présence d'un véhicule en danger).

Le vitrage peut comprendre une diode réceptrice de signaux de commande, notamment dans l'infrarouge, pour télécommander les diodes.

Le vitrage est destiné à équiper tout véhicule :
- vitre latérale d'un véhicule terrestre, notamment automobile, véhicule utilitaire, camion, train, notamment avec l'élément fonctionnel qui est une pièce de maintien d'un système de lève-vitre ou avec le capot enjoliveur,
- toit mobile ou fixe d'un véhicule terrestre, notamment automobile, véhicule utilitaire, camion, train, avec une première feuille éventuellement galbée, notamment un vitrage feuilleté,
- pare brise d'un véhicule terrestre, notamment automobile, véhicule utilitaire, camion, train, notamment avec la ou les zones lumineuses (formant une signalisation « HUD » par exemple) dans la bordure en émail ou à proximité, lunette arrière notamment dans la bordure en émail ou à proximité,
- hublot, pare-brise d'un véhicule aérien,
- vitres de fenêtre, toit, d'un véhicule aquatique, bateau, sous marin
- double ou triple vitrage dans un train, un bus.

Naturellement l'invention porte aussi sur un véhicule incorporant le vitrage défini précédemment.

D'autre part, l'invention a également pour objet un procédé de fabrication du vitrage lumineux tel que décrit précédemment comportant les étapes successives suivantes :
- (1) sur la première face du premier substrat l'application en un première couche d'un premier sol de précurseur du matériau constitutif de la couche de silice de l'isolateur optique, dopée ou non, notamment un composé hydrolysable tel qu'un halogénure ou un alcoxyde de silicium, dans un premier solvant notamment aqueux et/ou alcoolique, mélangé avec un agent porogène polymérique solide sous forme de particules notamment en suspension aqueuse, les particules étant de préférence de taille (plus petite et/ou plus grande dimension caractéristique) supérieure ou égale à 50nm, notamment entre 75 et 100nm (bornes comprises de préférence), et de préférence inférieure à 200nm mieux à 130nm,
- (2) un séchage de la couche, dite couche séchée, de préférence à température ambiante ou d'au plus 110°C, de préférence de durée d'au plus 1h, notamment éliminant le solvant,
- (3) sur la couche séchée, l'application une deuxième couche d'un deuxième sol de précurseur du matériau constitutif de la couche de silice formant le revêtement de protection, dopée ou non, notamment un composé hydrolysable tel qu'un halogénure ou un alcoxyde de silicium, dans un deuxième solvant notamment aqueux et/ou alcoolique,
- (4) un traitement thermique à au moins 450°C, notamment de densification simultanée des première et deuxième couches et d'élimination de l'agent porogène, de préférence premier traitement thermique (ou premier traitement thermique de plus de 200°C)
- (5) le refroidissement de préférence jusqu'à la température ambiante éventuellement lentement pour éviter au maximum le risque de fissures (notamment distinct d'une trempe)
- (6) l'application de la peinture ou de l'émail (sous forme liquide),
- (7) un éventuel autre traitement thermique de préférence d'au plus 200°C (pour la peinture).

Le dépôt (1) et/ou (3) sur le substrat peut être réalisé par pulvérisation, par immersion et tirage à partir du sol de silice (ou « dip coating »), par centrifugation (ou « spin coating »), par coulée (« flow-coating »), par rouleau (« roll coating »).

On peut ainsi choisir de la silice élaborée à partir de tétraétoxysilane (TEOS), de silicate de sodium, de lithium ou de potassium ou des matériaux hybrides obtenus à partir de précurseurs de type organosilane dont la formule générale est

R2ₙSi(OR1)₄₋ₙ

avec n un entier entre 0 et 2, R1 une fonction alkyl de type CₓH₂ₓ₊₁, R2 un groupement organique comprenant par exemple une fonction alkyl, époxy, acrylate, méthacrylate, amine, phényle, vinyle. Ces composés hybrides peuvent être utilisés mélangés ou seuls, en solution dans l'eau ou dans un mélange eau/alcool à un pH approprié.

Comme couche hybride, on peut choisir une couche à base de méthyltriéthoxysilane (MTEOS), un organosilane à groupement organique non réactif. Le MTEOS est un organosilane qui possède trois groupements hydrolysables et dont la partie organique est un méthyle, non réactif.

De préférence, le deuxième sol est MTEOS/ TEOS en base alcool, de préférence dans un isopropanol, notamment lorsque l'épaisseur e3 visé est inférieur à 300nm pour un mouillage optimal, meilleur qu'avec un solvant aqueux et même le premier sol est TEOS dans un solvant aqueux et les particules polymériques en suspension aqueuse.

Lorsque le deuxième sol est MTEOS/ TEOS dans un solvant éthanol on préfère limiter l'épaisseur e3 à 120nm environ même à 100nm.

Toutefois, on a plus de choix de deuxième sol si e3 est d'au moins 300nm et mieux d'au moins 400nm par exemple MTEOS/ TEOS en base aqueuse, notamment dans solution acide (HCl), par exemple à pH2.

Il est plus aisé de déposer l'émail ou la peinture sur la couche de silice poreuse et la couche de silice consolidées. Toutefois, alternativement si le premier revêtement est de l'émail, on sèche la deuxième couche et le traitement thermique (4) est le seul traitement thermique, pour éliminer l'agent porogène et cuire l'émail.

Le traitement thermique (premièreet deuxième couche voire avec émail ou même peinture) peut être à au moins 500°C, voire à au moins 600°C pendant une durée inférieure ou égale à 15minutes, de préférence à 5minutes et est éventuellement suivi une trempe.

En effet, les deux couches et l'éventuel émail ont la capacité de supporter les traitements thermiques à haute température sans se fissurer et sans altération notable de ses propriétés optiques de sa durabilité

Le traitement thermique, notamment bombage/formage, peut être suivi d'une opération de trempe, à au moins 600°C pendant une durée inférieure ou égale à 5 minutes.

Le traitement thermique peut être un bombage/formage entre 650 et 670°C suivi d'une opération de trempe.

Le traitement thermique peut être un bombage/formage entre 600 et 650°C entre 2 et 4min (sans trempe ensuite).

On préfère que le traitement thermique et/ou que le refroidissement ne soit pas trop brutal pour éviter les risques de fissures dans les couches. On préfère que la matière de l'agent porogène s'élimine avant que tout soit consolidé et densifié.

On peut ajuster à façon l'indice de réfraction de la couche de silice poreuse en fonction du volume de pores. On peut utiliser la relation suivante pour le calcul de l'indice :
n=f.n₁+(1-f).nₚₒᵣₑₛ où f est la fraction volumique du matériau constitutif de la couche et n₁ son indice de réfraction et nₚₒᵣₑₛ est l'indice des pores généralement égal à 1 s'ils sont vides.

On peut choisir en particulier un agent porogène en l'un des polymères suivants :
- en polyméthacrylate de méthyle (PMMA),
- en copolymères méthyl (méth)acrylate/acide (méth)acrylique,
- en polymères polycarbonates, polyester, polystyrène, etc
- un latex,
ou d'une combinaison de plusieurs de ces matériaux.

L'agent porogène solide peut comprendre de manière avantageuse des billes de préférence polymériques notamment de type PMMA, copolymère méthyl méthacrylate/acide acrylique, polystyrène L'agent porogène solide peut être un latex est de préférence acrylique ou styrénique, stabilisé dans l'eau par un tensioactif, notamment anionique.

Il est tout à fait possible de réaliser un revêtement de protection micrométrique, et de préférence d'au plus 3µm.

Les détails et caractéristiques avantageuses de l'invention vont maintenant ressortir des exemples suivants non limitatifs, à l'aide des figures :
- les figures 1 à 4 sont des vues schématiques et partielles en coupe de vitrages lumineux avec isolateur optique protégé dans plusieurs modes de réalisation de l'invention,

Les éléments ne sont pas à l'échelle.

### EXEMPLES DE VITRAGES LUMINEUX

La figure 1 montre une vue partielle en coupe d'un vitrage lumineux 100 avec isolateur optique protégé dans un premier mode de réalisation comportant :
- un premier substrat verrier 1, qui est une vitrage ici de forme rectangulaire plan ou en variante bombé, en verre silicosodocalcique clair ou extraclair, (de 6mm environ par exemple pour le bâtiment ou d'au plus 3mm pour l'automobile), d'indice de réfraction n1 d'environ 1,5 à 550nm, de TL d'au moins 90%, avec des première et deuxième face principales 11, 12 et une première tranche 13,
- une source de lumière 4, ici un ensemble de diodes électroluminescentes (en une rangée) sur une carte de circuit imprimé dite PCB 41, couplée optiquement à la tranche 13 dit de guidage du premier substrat verrier, le premier substrat verrier guidant la lumière émise par les diodes de préférence espacées d'au plus 2mm de la tranche de guidage, de préférence centrées sur la tranche et de largeur inférieure à l'épaisseur du verre 1,
- des moyens d'extraction de lumière 6 associés au premier substrat verrier ici sur la deuxième face principale 12 qui sont une couche diffusante de préférence blanche en présentant une clarté L* d'au moins 50, de préférence un émail diffusant, ou en variante un dépoli de la deuxième face ou encore un concentrateur optique ou un sticker ou une encre (moyens amovibles), moyens d'extraction formant une zone lumineuse ici unique et par exemple centrale.

La première face principale 11 quant à elle comporte successivement :
- une couche sol gel de silice poreuse 2 d'épaisseur e2 de 800nm, d'indice de réfraction n2 à 550nm d'au plus 1,35 à 550nm la couche de silice poreuse 2 étant une matrice de silice avec des pores fermés 20 et ouverts en surface, notamment de forme sensiblement ovale ou sensiblement sphérique, chacun de plus petite dimension d'au moins 30nm et de plus grande dimension d'au plus 120nm, de préférence entre 75nm et 100nm, couvrant sensiblement la première face 11, de surface interne 21 et surface externe 22,
- un revêtement de protection, minéral et transparent, 3 directement sur la couche de silice poreuse couvrant toute la couche de silice poreuse, ici qui est une couche de silice sol gel avec une épaisseur e3 supérieure à 50nm et un indice de réfraction n3 d'au moins 1,4 à 550nm, de surface interne 31 et surface externe 32,
- un premier revêtement décoratif 5 couvrant la première face, par exemple une couche continue de peinture et de préférence une laque colorée (blanc, noir compris) de préférence de couleur distincte des moyens d'extraction, ou couche arrangée en motifs discrets colorés disjoints ou continus en une couleur ou des couleurs distinctes, par exemple fabriqué par masquage ou par sérigraphie, couche de surface interne 51 et surface externe 52.

Le vitrage 1 peut être trempé grâce au traitement thermique pour former la couche de silice poreuse sol gel 2 et la couche de silice sol gel dense 3. Le vitrage 1 peut être bombé grâce au traitement thermique pour former la couche de silice poreuse sol gel et la couche de silice sol gel dense.

L'émail d'extraction 6 présente par exemple la composition suivante :
- entre 20 et 60 % en poids de SiO₂,
- 10 à 45 % en poids de pigments réfractaires, incluant le Ti0₂, notamment de taille micronique
- de préférence pas plus de 20 % en poids d'alumine et/ou d'oxyde de zinc.

Les pigments TiO2 rendent l'émail suffisamment opaque pour visualiser l'émail à l'état off) et abaissent la TL

Des exemples de composition d'émail peuvent être l'émail sous la dénomination Ferro 194011 commercialisé par l'entreprise FERRO, la référence AF5000 commercialisé par la société JM, la référence VV30-244-1 commercialisé par Pemco.

L'émail est ici sérigraphié ou en variante imprimé. On peut envisager que le traitement thermique servant à fabriquer les couches sol gel 2, 3 servent à cuire l'émail.

Les moyens d'extraction peuvent former alternativement une pluralité de motifs lumineux par exemple en larges bandes de préférence périphériques et/ou motifs plus discrets notamment géométriques. Les motifs lumineux forment un décor, une signalétique, un LOGO, une marque. L'éclairage peut être continu ou clignotant et/ou de couleur variable.

On peut bien sur utiliser différents moyens d'extraction de lumière pour former différentes zones lumineuses.

On peut rajouter d'autres diodes sur la tranche opposée (non montrée ici) notamment dans le cas d'un vitrage de grande taille et/ou avec plusieurs motifs (d'extraction) centimétriques espacés.

Afin de voir le fond continu de laque (ou émail ou autre peinture) on peut souhaiter que la zone lumineuse ne soit pas répartie sensiblement sur tout le vitrage (pour éviter l'extraction sur toute la face porteuse des moyens d'extraction).

En variante, comme montré en figure 1' qui est une vue de détail, la couche diffusante peut être directement sur la première face sous la couche de silice poreuse 2 éventuellement avec une rupture ou une hétérogénéité d'épaisseur sur au niveau de chaque bord 63 et/ou la surface externe 62.

La peinture (laque) présente donc une première surface principale 51 interne) en contact avec le revêtement de protection et une deuxième surface principale 52 externe opposée à la première surface (donc plus éloigné du premier substrat verrier) qui est une surface libre.

Après installation du vitrage lumineux monolithique 100, cette surface libre 52 peut être en regard d'une paroi opaque d'un bâtiment (mur, cloison, plafond, toit). La surface libre du vitrage lumineux monolithique peut être est visible voire même accessible (au toucher) ou espacée notamment d'au plus 1cm et par exemple fixée par des moyens mécaniques. Dans une application de carrelage mural, on utilise de la colle sur le premier revêtement notamment couvrant la surface du substrat verrier pour sa fixation au mur.

Après installation du vitrage lumineux monolithique, cette surface libre peut être en regard d'une paroi vitrée d'un bâtiment (mur, cloison, plafond, toit) ou même d'un véhicule.

En variante, la deuxième surface 52 de la couche 5 formant un fond continu est feuilletée via un intercalaire de feuilletage (par exemple clair ou extraclair) en matière plastique comme le PVB ou l'EVA à un deuxième substrat verrier, par exemple identique au premier substrat verrier, par exemple pour former une cloison, un plafond, un sol.

En variante, la face 12 est feuilletée via un intercalaire de feuilletage (par exemple clair ou extraclair) en matière plastique comme le PVB ou l'EVA à un deuxième substrat verrier, par exemple identique au premier substrat verrier, On peut même insérer un système électrocommandable à propriétés optiques variables soit la séquence suivante sur la face 12 : premier PVB ou EVA/ premier support transparent d'électrode tel que du PET/ première électrode transparente notamment ITO ou multicouche argent/couche de cristaux liquides/ deuxième électrode transparente notamment ITO ou multicouche argent/ deuxième support transparent d'électrode tel que du PET/ deuxième PVB ou EVA. A l'état off, le système est opaque et à l'état on le système est transparent et révèle le premier revêtement. A l'état on la couche de cristaux liquides peut éventuellement faire partie des moyens d'extraction en complément voire en substitution de la couche diffusante sur la face 12. Le système électrocommandable peut ne couvrir toute la face 12 par exemple en décalé de la couche 6.

En variante, l'isolateur optique protégé (silice poreuse 2 et silice dense 3) peut (sensiblement) couvrir toute la surface 11 et le revêtement est dans une ou plusieurs zones par exemple périphériques et/ou forme un ou des motifs décoratifs. Par exemple on peut souhaiter garder un clair de vitre. Le vitrage peut être alors faire partir d'un double vitrage (ou d'un triple vitrage) comme un vitrage isolant par exemple côté premier revêtement 5, assemblé avec un deuxième vitrage espacé par une première lame de gaz. Entre ces vitrages, en périphérie, sont ajoutés un premier joint polymérique en cadre et un intercalaire formant espaceur. Usuellement, l'intercalaire est fixé à par ses faces latérales par du caoutchouc butyl qui a également pour rôle de rendre étanche l'intérieur du vitrage isolant à la vapeur d'eau. L'intercalaire est disposé en retrait à l'intérieur du vitrage et à proximité des bords longitudinaux des tranches des vitrages, de façon à ménager une gorge périphérique dans laquelle sont injectés le premier joint polymérique du type mastic, tel qu'en polysulfure ou polyuréthane. Le mastic confirme l'assemblage mécanique des deux vitrages et assure une étanchéité à l'eau liquide ou aux solvants.

La figure 2 montre une vue partielle en coupe d'un vitrage lumineux 200 avec isolateur optique protégé dans un deuxième mode de réalisation.

Seules les différences par rapport au premier mode sont décrites. Le vitrage lumineux 200 diffère comme suit.

La couche sol gel de silice poreuse 2 et la couche sol gel de silice de protection 3 sont discontinues formant une première zone d'isolation optique 24 ici périphérique et une deuxième zone d'isolation optique 25 centrale et/ou périphérique disjointe, par exemple réalisées après masquage avec un ruban adhésif dans une zone 23 par exemple centrale et/ou périphérique de préférence de largeur (plus petite dimension) au moins centimétrique. En variante, il peut y avoir une pluralité de zones masquées.

Le premier revêtement 5' est une laque blanche (ou un émail blanc) formant une zone de couverture 53, couvrant directement la première face (du verre 1) dans la zone de discontinuité (sans isolateur optique protégé) 23 et formant en même temps les moyens d'extraction, en remplacement des moyens d'extraction sur la deuxième face ou même en complément.

On peut toutefois prévoir de la laque ou de l'émail blanc uniquement dans la ou les zones 23 et choisir sur la première zone d'isolation 24 un émail ou laque décoratif d'une ou d'autres couleurs données de surface 54 continue ou discontinue, et/ou choisir sur la deuxième zone d'isolation 25 un émail ou laque décoratif d'une ou d'autres couleurs données de surface 55 continue ou discontinue.

Par sérigraphie, l'émail ou la laque peut être discontinue même dans la ou les zones libres 23 si on souhaite par exemple une des zones de transparence ou si la laque ou l'émail sont formés d'un réseau de motifs diffusants (rendu lumière uniforme etc).

Alternativement, la couche de silice sol gel de protection 3 peut être présente sous la laque 5' (ou un émail) dans la ou les zones sans isolateur optique 23 car elle présente un indice de réfraction acceptable. En outre, elle est transparente.

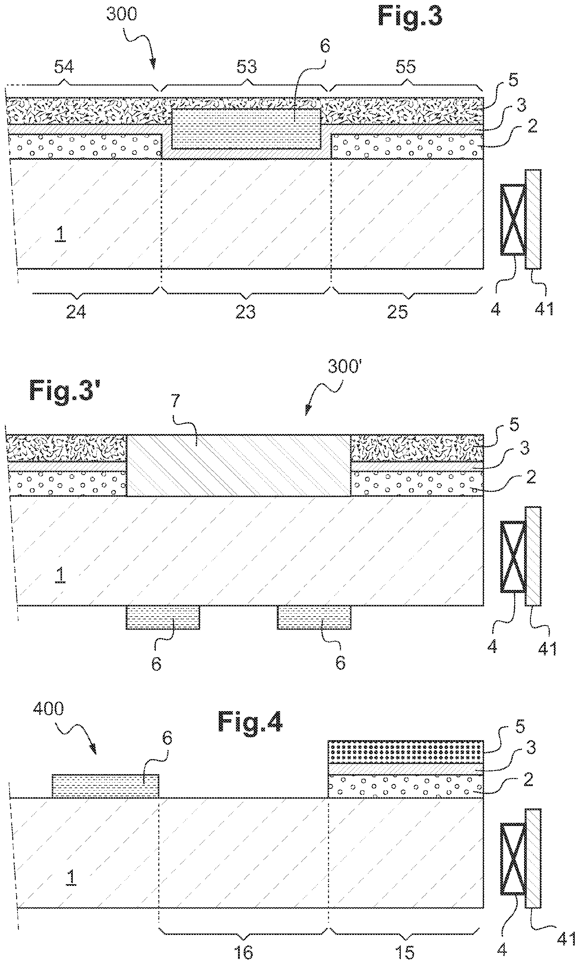

La figure 3 montre une vue partielle en coupe d'un vitrage lumineux 300 avec isolateur optique protégé dans un troisième mode de réalisation.

Seules les différences par rapport au deuxième mode sont décrites. Le vitrage lumineux 300 diffère comme suit.

La couche de silice sol gel de protection 3 est présente dans la ou les zones 23 sans isolateur optique car elle présente un indice de réfraction acceptable. En outre, elle est transparente.

Les moyens d'extraction 6 par exemple un émail diffusant, de préférence blanc sont distincts du premier revêtement 5, par exemple d'une couleur donnée (distincte du blanc ou non). Le premier revêtement 5 couvre l'émail diffusant 6 (de manière optionnelle) dans la zone 23 sans isolateur optique.

Alternativement, les moyens d'extraction 6 sont sur la face opposée par exemple amovibles comme un sticker ou une encre effacable.

La figure 3' montre une vue partielle en coupe d'un vitrage lumineux 300' avec isolateur optique protégé dans une variante du troisième mode de réalisation.

Seules les différences par rapport au troisième mode sont décrites. Le vitrage lumineux 300' diffère comme suit.

Les moyens diffusants 6 par exemple un émail ou une laque blanche (ou un dépoli ou un concentrateur optique ou un moyen amovible come un sticker ou une encre effaçable) sont sur la deuxième face et sur deux zones par exemple deux bandes. Dans la zone sans isolation optique est présente un miroir 7 notamment par argenture (de préférence avec une couche de protection de l'argenture, classique) ou en variante un miroir espion par exemple un empilement à base de chrome comme le produit SGG Mirastar de la société Demanderesse. La couche de silice sol gel de protection 3, absente ici dans la zone sans isolateur optique, pourrait être présente. Le premier revêtement 5 ici discontinu pourrait couvrir le miroir (notamment formant sa couche de protection).

Les deux zones lumineuses 6 sont en regard de la périphérie de la zone miroir ou alternativement en regard des zones d'isolation optique.

On peut rajouter d'autres diodes sur la tranche opposée.

Ce miroir éclairant 300' peut être feuilleté via la deuxième face ou du côté de la première face.

En variante, la zone sans isolation (optique) comporte seulement sur une aire la couche miroir, notamment centrale, et de part et d'autre les moyens d'extraction par exemple le dépoli de la première face ou une couche diffusante et notamment une peinture ou laque blanche distincte ou correspond au premier revêtement 5 sur la première et/ou la deuxième zone d'isolation optique et même s'étend à l'arrière de la couche miroir 7 (à l'argent etc).

La figure 4 montre une vue partielle en coupe d'un vitrage lumineux 400 avec isolateur optique protégé dans un quatrième mode de réalisation.

Seules les différences par rapport au premier mode sont décrites. Le vitrage lumineux 400 diffère comme suit.

La couche sol gel de silice poreuse 2, la couche sol gel de silice 3 formant le revêtement de protection et le premier revêtement 5 notamment un émail de masquage (couche pleine ou discontinue) ou décoratif sont sur une bordure 15 de la première face par exemple, centimétrique par exemple d'au plus 10cm, de préférence formant un cadre sur toute la périphérie. Dans une zone plus centrale de la première face sont présents les moyens d'extraction 6, par exemple un émail diffusant espacé par une zone transparente 16. La transparence du vitrage 400 est la plus étendue possible. L'émail 5 est par exemple noir ou gris et sert pour masquage des éléments ou pièces (en particulier dans un véhicule) et/ou supprimer ou réduire la lumière parasite des rayons aux grands angles. L'isolateur optique 2 permet de récupérer certains rayons pour le guidage.

Des diodes peuvent être rajoutées sur le chant opposé à la tranche de couplage. L'émail de masquage 5 forme de préférence un cadre périphérique, de préférence tout comme l'isolateur optique protégé.

En variante, le moyen d'extraction 6 est sur l'autre face.

Ce vitrage lumineux 400 par exemple utilisé dans un véhicule (vitre latérale par exemple), un équipement urbain (abribus etc), un bâtiment, peut être feuilleté coté première ou deuxième face, ou encore peut être monté dans un double ou triple vitrage coté première ou deuxième face.

Si les moyens d'extraction sont amovibles comme un sticker, on préfère que la deuxième face soit extérieure à la lame de gaz entre les vitrages (d'un double ou triple vitrage isolant).

Si on veut protéger les moyens d'extraction, on préfère que la deuxième face soit du coté de la lame de gaz entre les vitrages.

### EXEMPLES D'ISOLATEURS OPTIQUES PROTEGES

Sur une première face principale de quatre verre flotté silicosodocalcique d'épaisseur 6 mm, numérotés E1 à E4, tel que le verre Diamant de la société Saint Gobain Glass France, on forme quatre isolateurs optiques protégés, chacun sous forme d'une couche sol gel de silice poreuse d'épaisseur e2 de 800 nm environ d'épaisseur, avec 18 % environ d'extrait sec de SiO₂ et 80% environ de porosité, d'indice de réfraction n2 d'environ 1,15 à 550nm, revêtue d'une couche de silice (dense) comme revêtement de protection transparent d'indice de réfraction n2 d'environ 1,45 à 550nm et d'épaisseur e3 variable comme suit:
- pour E1 : e3 est de 80nm environ.
- pour E2 : e3 est de 130nm environ
- pour E3 : e3 est de 200nm environ
- pour E4 : e3 est de 250nm environ

On prépare une formulation utilisée pour tous ces quatre exemples.

Une solution constituée de 12,45 ml de tétraéthoxysilane -TEOS- (40 % en poids) et de 17,55 ml d'HCI aqueux à pH2 est agitée pendant au moins une heure.

A 26 ml de cette solution de TEOS pré-hydrolysé, on ajoute 15 ml d'une solution aqueuse d'agents porogènes polymériques solides qui sont des billes de latex BT21 (Neocryl®- de diamètre 80nm environ) commercialisé par la société IMCD France SAS, et 9 ml d'HCl à pH2.

On recouvre chaque verre des exemples E1 à E4 de ce mélange liquide par spin coating (tournette) à la vitesse de 750 t/min et accélération de 1000 t/min/s pendant 30 s.

Après on réalise un séchage de 30 min à 110 °C.

Sur cette couche séchée, on recouvre d'une composition liquide de formulation variante pour les exemples E1 à E4 comme indiqué ci-dessous
E1
   A 10,7 g d'une solution de tétraéthoxysilane -TEOS- + méthyltriéthoxysilane -MTEOS- à 28 % en poids dans l'isopropanol -IPA- (solution commerciale de la société Evonik sous le nom de Xenios®) sont ajoutés à 89,3 g d'IPA de manière à obtenir une concentration de 3 % en poids de TEOS + MTEOS
   Le dépôt de ce mélange est effectué sur la couche séchée refroidie, par spin coating (tournette) à une accélération de 1000 t/min/s, pendant 30 s, à une vitesse de 2000 t/min
E2
   A 10,7 g d'une solution de tétraéthoxysilane -TEOS- + méthyltriéthoxysilane -MTEOS- à 28 % en poids dans l'isopropanol -IPA-. sont ajoutés 89,3 g d'IPA de manière à obtenir une concentration de 3 % en poids de TEOS + MTEOS
   Le dépôt de ce mélange est effectué sur la couche séchée refroidie, par spin coating (tournette) à une accélération de 1000 t/min/s, pendant 30 s, à une vitesse de 2000 t/min
E3
   A 21,4 g d'une solution de tétraéthoxysilane -TEOS- + méthyltriéthoxysilane -MTEOS- à 28 % en poids dans l'isopropanol -IPA-. sont ajoutés 78,6 g d'IPA de manière à obtenir une concentration de 6 % en poids de TEOS + MTEOS.
   Le dépôt de ce mélange est effectué sur la couche séchée refroidie, par spin coating (tournette) à une accélération de 1000 t/min/s, pendant 30 s, à une vitesse de 2000 t/min
E4
   A 21,4 g d'une solution de tétraéthoxysilane -TEOS- + méthyltriéthoxysilane -MTEOS- à 28 % en poids dans l'isopropanol -IPA-. sont ajoutés 78,6 g d'IPA de manière à obtenir une concentration de 6 % en poids de TEOS + MTEOS.
   Le dépôt de ce mélange est effectué sur la couche séchée refroidie, par spin coating (tournette) à une accélération de 1000 t/min/s, pendant 30 s, à une vitesse de 2000 t/min.

Puis pour chaque exemple E1 à E4 on recuit comme suit: montée à 100°C en 10min, 100°C pendant 1h, de 100 à 450°C en 3h, 450°C pendant 3h, puis refroidissement.

En variante, on augmente le pallier maximal à 600°C ou même au-delà en diminuant la durée de ce pallier à moins de 15min, même 5min, en bombant éventuellement le verre, et/ou même éventuellement on réalise une opération de trempe.

En variante il est tout à fait possible de réaliser un revêtement de protection plus épais par exemple micrométrique et de préférence d'au plus 3µm.

Une formulation de laque, colorée, est ensuite appliquée en pleine couche sur chaque revêtement de protection, de 50µm d'épaisseur, déposée selon le procédé du rideau. Le solvant est du xylène ou en variante aqueux.

La laque après séchage comprend les ingrédients suivants :
- un liant sous forme de résine polyuréthane obtenue par réticulation, par un isocyanate non aromatique, de résines acryliques hydroxylées issues de la polymérisation d'un styrène acrylique
- des matières minérales (pigments et charges) à hauteur de 55% en masse.

Cette laque est obtenue par dépôt au rideau, suivi d'un séchage pendant une durée de 5 minutes.

Les moyens d'extraction sont l'émail diffusant blanc de l'exemple 1, sur la zone centrale de la deuxième face.

Les luminances mesurées à la normale des exemples E1 à E4 sont similaires. Par comparaison, en l'absence de la couche de silice de protection, le guidage n'est pas satisfaisant.

## Revendications

1. Vitrage lumineux (100, 200, 300, 300', 400) comportant :
- un premier substrat verrier (1), en verre minéral, d'indice de réfraction n1 inférieur à 1,6 à 550 nm, avec des première (11) et deuxième face principales (12) et une tranche (13), première face principale porteuse :
- d'un premier revêtement (5, 5') sous forme d'une peinture ou d'un émail, en contact optique avec la première face principale,
- d'un isolateur optique, sur la première face principale et sous le premier revêtement, l'isolateur comportant une couche de silice poreuse (2) d'épaisseur e2 d'au moins 300nm, d'indice de réfraction n2 d'au plus 1,35 à 550nm,
- une source de lumière (4), couplée optiquement au premier substrat verrier, le premier substrat verrier guidant la lumière émise par la source de lumière,
- des moyens d'extraction de lumière (6, 5') associés au premier substrat verrier, **caractérisé en ce qu'**il comprend un revêtement de protection (3), minéral et transparent, directement sur la couche de silice poreuse et directement sous le premier revêtement.

2. Vitrage lumineux (100, 200, 300, 300', 400) selon la revendication précédente, **caractérisé en ce que** le revêtement de protection (3) comprend une couche de silice avec une épaisseur e3 supérieure à 50nm et un indice de réfraction n3 d'au moins 1,4 à 550nm.

3. Vitrage lumineux ((100, 200, 300, 300', 400) selon l'une quelconque des revendications précédentes, **caractérisé en ce que** le revêtement de protection (3) comprend une couche de silice avec une épaisseur e3 supérieure ou égale à 80nm et un indice de réfraction n3 d'au moins 1,4 à 550nm.

4. Vitrage lumineux (100, 200, 300, 300', 400) selon l'une quelconque des revendications précédentes, **caractérisé en ce que** la couche de silice poreuse (2) est une matrice de silice avec des pores fermés en volume, notamment de forme sensiblement ovale ou sensiblement sphérique, chacun de plus petite dimension d'au moins 30nm et de plus grande dimension d'au plus 120nm,de préférence entre 75nm et 100nm, le revêtement de protection comprend une couche avec une épaisseur e3 supérieure à la plus grande dimension des pores et de préférence submicronique.

5. Vitrage lumineux (200, 300, 400) selon l'une quelconque des revendications précédentes, **caractérisé en ce que** la couche de silice poreuse (2) couvre partiellement la première face (11), présentant ainsi une première zone dite d'isolation optique (24) comportant en outre le revêtement de protection (3) et le premier revêtement (5, 5') continu ou discontinu, première zone d'isolation optique de préférence plus proche de la source de lumière (4) que les moyens d'extraction (5',6) et ce qu'une zone adjacente et de préférence contigüe à la première zone d'isolation optique comporte les moyens d'extraction (6, 5'), notamment formés par le premier revêtement (5'), moyens d'extraction directement sur la première face principale (11) ou directement sur le revêtement de protection (3) alors directement sur la première face principale (11) et de préférence d'indice de réfraction n3 à 550nm tel que n1-n3, de préférence en valeur absolue, soit inférieur à 0,1.

6. Vitrage lumineux (200,) selon l'une quelconque des revendications précédentes, **caractérisé en ce que** la couche de silice poreuse (2) couvre partiellement la première face (11) et est discontinue, présentant ainsi une première zone dite d'isolation optique (24) comportant en outre le revêtement de protection (3) et le premier revêtement (5') continu ou discontinu, première zone d'isolation optique de préférence plus proche de la source de lumière (4) que les moyens d'extraction (5') et présentant ainsi une deuxième zone dite d'isolation optique (24) comportant en outre le revêtement de protection (3) et le premier revêtement (5) continu ou discontinu, et **en ce qu'**une zone dite d'extraction comporte les moyens d'extraction est entre la première et la deuxième zone d'isolation optique (24, 25) de préférence adjacente et même contigüe à la première et la deuxième zone d'isolation optique et les moyens d'extraction sont formés par le premier revêtement (5'), moyens d'extraction directement sur la première face principale (11) ou directement sur le revêtement de protection (3) qui est alors directement sur la première face principale (11) et de préférence, d'indice de réfraction n'3 à 550nm tel que n1-n'3, de préférence en valeur absolue, soit inférieur à 0,1.

7. Vitrage lumineux (300', 400) selon l'une quelconque des revendications précédentes, **caractérisé en ce que** la couche de silice poreuse (2) est discontinue, présentant ainsi au moins un première zone dite d'isolation optique (24) et une deuxième zone dite d'isolation optique (25) séparées par une zone de discontinuité (23), le revêtement de protection (3) et le premier revêtement (5) continu ou discontinu sont présents dans la première zone d'isolation optique (24), de préférence plus proche de la source de lumière que les moyens d'extraction et de préférence sont présents dans la deuxième zone d'isolation optique (25) et **en ce que**:
- la zone de discontinuité comporte, et de préférence forme, une zone de transparence, de préférence plus centrale que la première zone d'isolation optique, les moyens d'extraction (6 étant en regard ou décalés de la zone de discontinuité, notamment de surface supérieure à une zone lumineuse formée par les moyens d'extractions et/ou à la première zone d'isolation optique,
- et/ou la zone de discontinuité comporte et de préférence étant formée d'une couche formant un miroir (7) ou un miroir espion, directement sur la première face principale, couche miroir éventuellement avec une surcouche notamment de protection ou de masquage arrière formée par le premier revêtement.

8. Vitrage lumineux (400) selon l'une quelconque des revendications précédentes, **caractérisé en ce que** la couche de silice poreuse (2), le revêtement de protection (3) et le premier revêtement (5) continu ou discontinu s'étendent sur une portion de la première face principale, notamment sur une portion sur et en périphérie de la première face principale dite bordure d'isolation optique (15), ladite portion ou bordure étant du côté du couplage optique avec la source de lumière (4) et à côté de la portion ou bordure est présente une zone de transparence et/ou une zone avec les moyens d'extraction de lumière.

9. Vitrage lumineux (100, 200, 300, 300', 400) selon l'une quelconque des revendications précédentes, **caractérisé en ce que** le premier revêtement (5) est blanc, en présentant une clarté L* d'au moins 50 et fait partie ou forme les moyens d'extraction (6).

10. Vitrage lumineux selon l'une quelconque des revendications précédentes, **caractérisé en ce qu'**entre le revêtement de protection et le premier revêtement est intercalé un primaire d'adhésion transparent notamment à base de silanes.

11. Vitrage lumineux (100, 200, 300, 300', 400) selon l'une quelconque des revendications précédentes, **caractérisé en ce que** les moyens d'extraction (6) sont diffusants, sous forme d'une texturation de surface, notamment de la première ou de la deuxième face, ou d'une couche diffusante notamment un émail, une peinture, une encre ou encore un sticker diffusant et/ou forment un concentrateur de lumière.

12. Vitrage lumineux (100, 200, 300, 300', 400) selon l'une quelconque des revendications précédentes, **caractérisé en ce que** la source de lumière (4) est un ensemble de diodes électroluminescentes de préférence alignées sur une carte de circuit imprimé et couplées optiquement à la tranche.

13. Vitrage lumineux (100, 200, 300, 300', 400) selon l'une quelconque des revendications précédentes, **caractérisé en ce que** le premier substrat (1) est le seul substrat verrier en verre minéral et de préférence le premier revêtement, continu ou discontinu, présente une première surface orientée vers la première face, sur le revêtement de protection voire même sur la première face, et une deuxième surface principale opposée qui est une surface libre ou éventuellement revêtue d'une colle.

14. Vitrage lumineux (100, 200, 300, 300', 400) selon l'une quelconque des revendications précédentes **caractérisé en ce que** la couche de silice poreuse (2) est une couche sol-gel et le revêtement de protection (3) est une couche de silice sol-gel.

15. Vitrage lumineux (100, 200, 300, 300', 400) selon l'une quelconque des revendications précédentes **caractérisé en ce que** le premier substrat verrier (1) est trempé et/ou bombé.

16. Vitrage lumineux (100, 200, 300, 300', 400) selon l'une quelconque des revendications précédentes **caractérisé en ce que** e2 est d'au moins 400nm et même d'au moins 600nm.

17. Vitrage lumineux selon l'une quelconque des revendications précédentes, **caractérisé en ce que** le premier substrat est feuilleté par un intercalaire de feuilletage à un deuxième substrat verrier de préférence en verre minéral ou en verre organique, intercalaire de feuilletage soit sur la deuxième face soit de préférence sur le premier revêtement et/ou **en ce que** le premier substrat fait partie d'un double ou triple vitrage, vitrage isolant ou sous vide.

18. Cloison, porte, fenêtre, tablette ou porte d'équipement réfrigéré domestique ou professionnel, vitrage d'ameublement, notamment porte de placard, plafond, garde-corps, panneau mural, carrelage mural, marche d'escalier, comptoir, vitrine, miroir, vitrage de véhicule incorporant un vitrage lumineux (100, 200, 300, 300', 400) selon l'une des revendications précédentes.

19. Procédé de fabrication du vitrage lumineux (100, 200, 300, 300', 400) selon l'une quelconque des revendications précédentes **caractérisé en ce qu'**il comprend les étapes successives suivantes :
- (1) sur la première face du premier substrat l'application en un première couche d'un premier sol de précurseur du matériau constitutif de la couche de silice de l'isolateur optique, dopé ou non, notamment un composé hydrolysable tel qu'un halogénure ou un alcoxyde de silicium, dans un premier solvant notamment aqueux et/ou alcoolique, mélangé avec un agent porogène polymérique solide sous forme de particules notamment en suspension aqueuse, les particules étant de préférence de taille supérieure ou égale à 50nm, de préférence entre 75 et 100nm,
- (2) un séchage de la couche, dite couche séchée,
- (3) sur la couche séchée, l'application en une deuxième couche d'un deuxième sol de précurseur du matériau constitutif de la couche de silice formant le revêtement de protection, dopé ou non, notamment un composé hydrolysable tel qu'un halogénure ou un alcoxyde de silicium, dans un deuxième solvant notamment aqueux et/ou alcoolique,
- (4) un traitement thermique à au moins 450°C,
- (5) le refroidissement de préférence jusqu'à la température ambiante,
- (6) l'application de la peinture ou de l'émail.

20. Procédé de fabrication du vitrage lumineux (100, 200, 300, 300', 400) selon la revendication précédente **caractérisé en ce que** le deuxième sol est du TEOS/MTEOS et de préférence le premier sol est du TEOS dans un solvant aqueux et les particules polymériques sont en suspension aqueuse.

## Patentansprüche

1. Leuchtglasfläche (100, 200, 300, 300', 400), umfassend :
- ein erstes Glassubstrat (1) aus Mineralglas mit einem Brechungsindex n1 von weniger als 1,6 bei 550 nm mit erster (11) und zweiter Hauptseite (12) und einer Kante (13), wobei die erste Hauptseite aufweist:
- eine erste Beschichtung (5, 5') in Form einer Lackierung oder eines Emails in optischem Kontakt mit der ersten Hauptseite,
- einen optischen Isolator auf der ersten Hauptseite und unter der ersten Beschichtung, wobei der Isolator eine poröse Siliziumdioxidschicht (2) mit einer Dicke e2 von mindestens 300 nm und einem Brechungsindex n2 von höchstens 1,35 bei 550 nm umfasst,
- eine Lichtquelle (4), die optisch an das erste Glassubstrat gekoppelt ist, wobei das erste Glassubstrat das von der Lichtquelle ausgestrahlte Licht leitet,
- Lichtextraktionsmittel (6, 5'), die dem ersten Glassubstrat zugeordnet sind,
**dadurch gekennzeichnet, dass** sie eine mineralische und transparente Schutzbeschichtung (3) unmittelbar auf der porösen Siliziumdioxidschicht und unmittelbar unter der ersten Beschichtung umfasst.

2. Leuchtglasfläche (100, 200, 300, 300', 400) nach vorstehendem Anspruch, **dadurch gekennzeichnet, dass** die Schutzbeschichtung (3) eine Siliziumdioxidschicht mit einer Dicke e3 von über 50 nm und einem Brechungsindex n3 von mindestens 1,4 bei 550 nm umfasst.

3. Leuchtglasfläche (100, 200, 300, 300', 400) nach einem der vorstehenden Ansprüche, **dadurch gekennzeichnet, dass** die Schutzbeschichtung (3) eine Siliziumdioxidschicht mit einer Dicke e3 von über oder gleich 80 nm und einem Brechungsindex n3 von mindestens 1,4 bei 550 nm umfasst.

4. Leuchtglasfläche (100, 200, 300, 300', 400) nach einem der vorstehenden Ansprüche, **dadurch gekennzeichnet, dass** die poröse Siliziumdioxidschicht (2) eine Siliziumdioxidmatrix mit geschlossenen Poren insbesondere einer im Wesentlichen ovalen oder im Wesentlichen sphärischen Form im Volumen ist, jede mit einer kleinsten Größe von mindestens 30 nm und einer größten Größe von höchstens 120 nm, vorzugsweise zwischen 75 nm und 100 nm, wobei die Schutzbeschichtung eine Schicht mit einer Dicke e3 größer als die größte Größe der Poren und vorzugsweise im Submikron-Bereich umfasst.

5. Leuchtglasfläche (200, 300, 400) nach einem der vorstehenden Ansprüche, **dadurch gekennzeichnet, dass** die poröse Siliziumdioxidschicht (2) die erste Seite (11) teilweise bedeckt, aufweisend damit einen ersten optischen Isolationsbereich (24), aufweisend ferner die Schutzbeschichtung (3) und die erste kontinuierliche oder diskontinuierliche Beschichtung (5, 5'), wobei der erste optische Isolationsbereich vorzugsweise näher an der Lichtquelle (4) ist als die Extraktionsmittel (5', 6) und dass ein benachbarter und vorzugsweise an den ersten optischen Isolationsbereich angrenzender Bereich die Extraktionsmittel (6, 5') aufweist, insbesondere gebildet von der ersten Beschichtung (5'), wobei die Extraktionsmittel unmittelbar auf der ersten Hauptseite (11) oder unmittelbar auf der Schutzbeschichtung (3), folglich unmittelbar auf der ersten Hauptseite (11), sind und vorzugsweise mit einem Brechungsindex n3 bei 550 nm, sodass n1-n3, vorzugsweise als absoluter Wert, kleiner als 0,1 ist.

6. Leuchtglasfläche (200) nach einem der vorstehenden Ansprüche, **dadurch gekennzeichnet, dass** die poröse Siliziumdioxidschicht (2) die erste Seite (11) teilweise bedeckt und diskontinuierlich ist, aufweisend damit einen ersten optische Isolationsbereich (24), aufweisend ferner die Schutzbeschichtung (3) und die erste kontinuierliche oder diskontinuierliche Beschichtung (5'), wobei der erste optische Isolationsbereich vorzugsweise näher an der Lichtquelle (4) ist als die Extraktionsmittel (5') und so einen zweiten optischen Isolationsbereich (24) aufweist, der ferner die Schutzbeschichtung (3) und die erste kontinuierliche oder diskontinuierliche Beschichtung (5) aufweist, und dadurch, dass sich ein Extraktionsbereich, der die Extraktionsmittel umfasst, zwischen dem ersten und zweiten optischen Isolationsbereich (24, 25) vorzugsweise benachbart und sogar angrenzend an den ersten und zweiten optischen Isolationsbereich befindet und die Extraktionsmittel durch die erste Beschichtung (5') gebildet sind, wobei sich die Extraktionsmittel unmittelbar auf der ersten Hauptseite (11) oder unmittelbar auf der Schutzbeschichtung (3) befinden, die dann unmittelbar auf der ersten Hauptseite (11) ist, und vorzugsweise einen Brechungsindex n'3 bei 550 nm aufweisen, sodass n1-n'3, vorzugsweise als absoluter Wert, kleiner als 0,1 ist.

7. Leuchtglasfläche (300', 400) nach einem der vorstehenden Ansprüche, **dadurch gekennzeichnet, dass** die poröse Siliziumdioxidschicht (2) diskontinuierlich ist, wodurch sie mindestens einen ersten optischen Isolationsbereich (24) und einen zweiten optischen Isolationsbereich (25) bildet, die durch einen diskontinuierlichen Bereich (23) getrennt sind, wobei die Schutzbeschichtung (3) und die erste kontinuierliche oder diskontinuierliche Beschichtung (5) im ersten optischen Isolationsbereich (24) vorzugsweise näher an der Lichtquelle als die Extraktionsmittel angeordnet und vorzugsweise in einem zweiten optischen Isolationsbereich (25) vorhanden sind und dadurch, dass:
- der diskontinuierliche Bereich einen Transparenzbereich aufweist und vorzugsweise bildet, vorzugsweise zentraler als der erste optische Isolationsbereich, wobei die Extraktionsmittel (6) gegenüber oder zum diskontinuierlichen Bereich versetzt sind, insbesondere mit einer Oberfläche, die größer als ein Leuchtbereich ist, der durch die Extraktionsmittel und/oder einen ersten optischen Isolationsbereich gebildet wird,
- und/oder der diskontinuierliche Bereich ein Schicht aufweist und vorzugsweise von dieser gebildet ist, die unmittelbar auf der ersten Hauptseite einen Spiegel (7) oder einen Einwegspiegel bildet, wobei die Spiegelschicht möglicherweise mit einer Deckschicht insbesondere zum Schutz oder zur rückseitigen Maskierung, die von der ersten Beschichtung gebildet ist, ausgeführt ist.

8. Leuchtglasfläche (400) nach einem der vorstehenden Ansprüche, **dadurch gekennzeichnet, dass** sich die poröse Siliziumdioxidschicht (2), die Schutzbeschichtung (3) und die erste kontinuierliche oder diskontinuierliche Beschichtung (5) über einen Abschnitt der ersten Hauptseite erstrecken, insbesondere über einen Abschnitt auf und am Rand der ersten Hauptseite, als optischer Isolationsrand (15) bezeichnet, wobei dieser Abschnitt oder Rand auf der Seite der optischen Kopplung mit der Lichtquelle (4) ist und neben dem Abschnitt oder Rand ein Transparenzbereich und/oder ein Bereich mit den Lichtextraktionsmitteln vorhanden ist.

9. Leuchtglasfläche (100, 200, 300, 300', 400) nach einem der vorstehenden Ansprüche, **dadurch gekennzeichnet, dass** die erste Beschichtung (5) weiß ist, mit einer Helligkeit L* von mindestens 50 und Teil der Extraktionsmittel (6) ist oder diese bildet.

10. Leuchtglasfläche nach einem der vorstehenden Ansprüche, **dadurch gekennzeichnet, dass** zwischen der Schutzbeschichtung und der ersten Beschichtung ein erstes transparentes Haftgrundmittel, insbesondere auf Silanbasis, ist.

11. Leuchtglasfläche (100, 200, 300, 300', 400) nach einem der vorstehenden Ansprüche, **dadurch gekennzeichnet, dass** die Extraktionsmittel (6) in Form einer Oberflächentexturierung, insbesondere der ersten oder der zweiten Seite, oder einer streuenden Schicht, insbesondere eines Emails, einer Lackierung, einer Druckfarbe oder auch einer streuenden Klebefolie, streuend sind und/oder einen Lichtkonzentrator bilden.

12. Leuchtglasfläche (100, 200, 300, 300', 400) nach einem der vorstehenden Ansprüche, **dadurch gekennzeichnet, dass** die Lichtquelle (4) eine Ansammlung an Leuchtdioden ist, die vorzugsweise auf einer Leiterplatte aufgereiht und optisch an die Kante gekoppelt sind.

13. Leuchtglasfläche (100, 200, 300, 300', 400) nach einem der vorstehenden Ansprüche, **dadurch gekennzeichnet, dass** das erste Substrat (1) das einzige Glassubstrat aus Mineralglas ist und vorzugsweise die erste kontinuierliche oder diskontinuierliche Beschichtung eine erste Oberfläche in Richtung der ersten Seite auf der Schutzbeschichtung oder sogar auf der ersten Seite und eine entgegengesetzte zweite Hauptoberfläche, die eine freie Oberfläche ist oder möglicherweise mit einem Kleber überzogen ist, aufweist.

14. Leuchtglasfläche (100, 200, 300, 300', 400) nach einem der vorstehenden Ansprüche, **dadurch gekennzeichnet, dass** die poröse Siliziumdioxidschicht (2) eine Sol-Gel-Schicht ist und die Schutzbeschichtung (3) eine Sol-Gel-Siliziumdioxidschicht ist.

15. Leuchtglasfläche (100, 200, 300, 300', 400) nach einem der vorstehenden Ansprüche, **dadurch gekennzeichnet, dass** das erste Glassubstrat (1) gehärtet und/oder gewölbt ist.

16. Leuchtglasfläche (100, 200, 300, 300', 400) nach einem der vorstehenden Ansprüche, **dadurch gekennzeichnet, dass** e2 mindestens 400 nm oder sogar mindestens 600 nm beträgt.

17. Leuchtglasfläche nach einem der vorstehenden Ansprüche, **dadurch gekennzeichnet, dass** das erste Substrat mittels einer Verbundzwischenschicht mit einem zweiten Glassubstrat vorzugsweise aus Mineralglas oder organischem Glas verbunden ist, wobei die Verbundzwischenschicht entweder auf der zweiten Seite oder vorzugsweise auf der ersten Beschichtung ist und/oder dadurch, dass das erste Substrat Teil einer Doppel- oder Dreifachverglasung, Isolierverglasung oder Vakuumverglasung ist.

18. Trennwand, Tür, Fenster, Fachboden oder Tür eines Kühlgeräts für den Hausgebrauch oder professionelle Zwecke, Möbelverglasung, insbesondere Schranktür, Decke, Geländer, Wandtafel, Wandfliesen, Treppenstufe, Theke, Vitrine, Spiegel, Fahrzeugscheiben mit einer Leuchtglasfläche (100, 200, 300, 300', 400) nach einem der vorstehenden Ansprüche.

19. Verfahren zur Herstellung der Leuchtglasfläche (100, 200, 300, 300', 400) nach einem der vorstehenden Ansprüche, **dadurch gekennzeichnet, dass** es die folgenden aufeinanderfolgenden Schritte umfasst:
- (1) Auftragen, auf die erste Seite des ersten Substrats in einer ersten Schicht eines ersten Sole-Präkursors, des Werkstoffs, aus dem die Siliziumdioxidschicht der optischen Isolation, dotiert oder nicht, gebildet ist, insbesondere einer hydrolisierbaren Verbindung wie zum Beispiel ein Halogenid oder ein Siliziumalcoxid, in einem ersten insbesondere wässrigen oder alkoholischen Lösungsmittel, gemischt mit einem festen, polymeren Porenbildner in Form von Partikeln, insbesondere in wässriger Suspension, wobei die Partikel vorzugsweise größer oder gleich 50 nm, vorzugsweise zwischen 75 und 100 nm, sind,
- (2) Trocknen der Schicht, als getrocknete Schicht bezeichnet,
- (3) Auftragen, auf die getrocknete Schicht, in einer zweiten Schicht eines zweiten Sole-Präkursors des Werkstoffs, aus dem die Siliziumdioxidschicht, die die dotierte oder nicht dotierte Schutzbeschichtung bildet, gebildet ist, insbesondere einer hydrolisierbaren Verbindung wie zum Beispiel ein Halogenid oder ein Siliziumalcoxid, in einem zweiten, insbesondere wässrigen und/oder alkoholischen Lösungsmittel,
- (4) Wärmebehandeln bei mindestens 450 °C,
- (5) Abkühlen vorzugsweise auf Raumtemperatur,
- (6) Auftragen der Lackierung oder des Emails.

20. Herstellungsverfahren der Leuchtglasfläche (100, 200, 300, 300', 400) nach vorstehendem Anspruch, **dadurch gekennzeichnet, dass** die zweite Sole TEOS/MTEOS ist und vorzugsweise die erste Sole TEOS ist in einem wässrigen Lösungsmittel und die Polymerpartikel in wässriger Suspension sind.

## Claims

1. A luminous glazing unit (100, 200, 300, 300', 400) comprising:
- a first glass substrate (1), made of mineral glass, having a refractive index n1 of less than 1.6 at 550 nm, with first (11) and second (12) main faces and an edge face (13), the first main face bearing:
- a first coating (5, 5') in the form of a paint or an enamel, in optical contact with the first main face,
- an optical isolator, on the first main face and underneath the first coating, the isolator comprising a porous silica layer (2) having a thickness e2 of at least 300 nm, having a refractive index n2 of at most 1.35 at 550 nm,
- a light source (4), optically coupled to the first glass substrate, the first glass substrate guiding the light emitted by the light source,
- light-extracting means (6, 5') associated with the first glass substrate, **characterized in that** it comprises a mineral and transparent protective coating (3) directly on the porous silica layer and directly underneath the first coating.

2. The luminous glazing unit (100, 200, 300, 300', 400) as claimed in the preceding claim, **characterized in that** the protective coating (3) comprises a silica layer with a thickness e3 of greater than 50 nm and a refractive index n3 of at least 1.4 at 550 nm.

3. The luminous glazing unit (100, 200, 300, 300', 400) as claimed in either one of the preceding claims, **characterized in that** the protective coating (3) comprises a silica layer with a thickness e3 of greater than or equal to 80 nm and a refractive index n3 of at least 1.4 at 550 nm.

4. The luminous glazing unit (100, 200, 300, 300', 400) as claimed in any one of the preceding claims, **characterized in that** the porous silica layer (2) is a silica matrix with closed pores in its volume, in particular of substantially oval or substantially spherical shape, each having a smallest dimension of at least 30 nm and a largest dimension of at most 120 nm, preferably between 75 nm and 100 nm, the protective coating comprises a layer with a thickness e3 greater than the largest dimension of the pores and preferably that is submicronic.

5. The luminous glazing unit (200, 300, 400) as claimed in any one of the preceding claims, **characterized in that** the porous silica layer (2) partially covers the first face (11), thus having a first optical isolation zone (24) additionally comprising the protective coating (3) and the first continuous or discontinuous coating (5, 5'), the first optical isolation zone preferably closer to the light source (4) than the extracting means (5',6) and that a zone adjacent to and preferably contiguous with the first optical isolation zone comprises the extracting means (6, 5'), in particular formed by the first coating (5'), the extracting means directly on the first main face (11) or directly on the protective coating (3) then directly on the first main face (11) and preferably having a refractive index n3 at 550 nm such that n1-n3, preferably as an absolute value, is less than 0.1.

6. The luminous glazing unit (200) as claimed in any one of the preceding claims, **characterized in that** the porous silica layer (2) partially covers the first face (11) and is discontinuous, thus having a first optical isolation zone (24) additionally comprising the protective coating (3) and the first continuous or discontinuous coating (5'), the first optical isolation zone preferably closer to the light source (4) than the extracting means (5') and thus having a second optical isolation zone (24) additionally comprising the protective coating (3) and the first continuous or discontinuous coating (5), and **in that** an extracting zone comprises the extracting means and is between the first and second optical isolation zones (24, 25) preferably adjacent to and even contiguous with the first and second optical isolation zones and the extracting means are formed by the first coating (5'), the extracting means directly on the first main face (11) or directly on the protective coating (3) which is then directly on the first main face (11) and preferably having a refractive index n'3 at 550 nm such that n1-n'3, preferably as an absolute value, is less than 0.1.

7. The luminous glazing unit (300', 400) as claimed in any one of the preceding claims, **characterized in that** the porous silica layer (2) is discontinuous, thus having at least a first optical isolation zone (24) and a second optical isolation zone (25) which are separated by a zone of discontinuity (23), the protective coating (3) and the first continuous or discontinuous coating (5) are present in the first optical isolation zone (24), preferably closer to the light source than the extracting means and preferably are present in the second optical isolation zone (25) and **in that**:
- the zone of discontinuity comprises, and preferably forms, a zone of transparency, preferably more central than the first optical isolation zone, the extracting means (6) facing or being offset from the zone of discontinuity, in particular having a surface area greater than a luminous zone formed by the extracting means and/or than the first optical isolation zone,
- and/or the zone of discontinuity comprises and preferably is formed of a layer that forms a mirror (7) or a two-way mirror, directly on the first main face, the mirror layer optionally with a rear, in particular protective or masking, overlayer formed by the first coating.

8. The luminous glazing unit (400) as claimed in any one of the preceding claims, **characterized in that** the porous silica layer (2), the protective coating (3) and the first continuous or discontinuous coating (5) extend over a portion of the first main face, in particular over a portion on and at the periphery of the first main face referred to as an optical isolation border (15), said portion or border being on the side of the optical coupling with the light source (4), and present next to the portion or border is a zone of transparency and/or a zone with the light-extracting means.

9. The luminous glazing unit (100, 200, 300, 300', 400) as claimed in any one of the preceding claims, **characterized in that** the first coating (5) is white, having a lightness L* of at least 50 and is part of or forms the extracting means (6).

10. The luminous glazing unit as claimed in any one of the preceding claims, **characterized in that** between the protective coating and the first coating a transparent adhesion primer, in particular based on silanes, is inserted.

11. The luminous glazing unit (100, 200, 300, 300', 400) as claimed in any one of the preceding claims, **characterized in that** the extracting means (6) are scattering, in the form of a surface texturing, in particular of the first or second face, or of a scattering layer, in particular an enamel, a paint, an ink or else a scattering sticker and/or form a light concentrator.

12. The luminous glazing unit (100, 200, 300, 300', 400) as claimed in any one of the preceding claims, **characterized in that** the light source (4) is an array of light-emitting diodes, preferably aligned on a printed circuit board and optically coupled to the edge face.

13. The luminous glazing unit (100, 200, 300, 300', 400) as claimed in any one of the preceding claims, **characterized in that** the first substrate (1) is the only glass substrate made of mineral glass and preferably the first continuous or discontinuous coating has a first surface oriented toward the first face, on the protective coating or even on the first face, and an opposite second main surface which is a free or optionally adhesive-coated surface.

14. The luminous glazing unit (100, 200, 300, 300', 400) as claimed in any one of the preceding claims, **characterized in that** the porous silica layer (2) is a sol-gel layer and the protective coating (3) is a sol-gel silica layer.

15. The luminous glazing unit (100, 200, 300, 300', 400) as claimed in any one of the preceding claims, **characterized in that** the first glass substrate (1) is tempered and/or curved.

16. The luminous glazing unit (100, 200, 300, 300', 400) as claimed in any one of the preceding claims, **characterized in that** e2 is at least 400 nm and even at least 600 nm.

17. The luminous glazing unit as claimed in any one of the preceding claims, **characterized in that** the first substrate is laminated by a lamination interlayer to a second glass substrate preferably made of mineral glass or made of organic glass, the lamination interlayer either on the second face or preferably on the first coating and/or **in that** the first substrate is part of a double or triple glazing unit, insulating glazing unit or vacuum glazing unit.

18. A partition, door, window, shelf or door of domestic or professional refrigerated equipment, furniture glazing, especially cupboard door, ceiling, railing, wall panel, wall tiling, staircase step, counter, store window, mirror or vehicle glazing incorporating a luminous glazing unit (100, 200, 300, 300', 400) as claimed in one of the preceding claims.

19. A process for manufacturing the luminous glazing unit (100, 200, 300, 300', 400) as claimed in any one of the preceding claims, **characterized in that** it comprises the following successive steps:
- (1) on the first face of the first substrate, the application as a first layer of a first precursor sol of the material constituting the silica layer of the optical isolator, doped or undoped, in particular a hydrolyzable compound such as a silicon halide or alkoxide, in a first solvent, in particular aqueous and/or alcoholic solvent, mixed with a solid polymer pore-forming agent in the form of particles in particular in aqueous suspension, the particles preferably having a size of greater than or equal to 50 nm, preferably between 75 and 100 nm,
- (2) a drying of the layer, referred to as dried layer,
- (3) on the dried layer, the application as a second layer of a second precursor sol of the material constituting the silica layer forming the protective coating, doped or undoped, in particular a hydrolyzable compound such as a silicon halide or alkoxide, in a second solvent, in particular aqueous and/or alcoholic solvent,
- (4) a heat treatment at at least 450°C,
- (5) cooling, preferably to room temperature,
- (6) application of the paint or enamel.

20. The process for manufacturing the luminous glazing unit (100, 200, 300, 300', 400) as claimed in the preceding claim, **characterized in that** the second sol is TEOS/MTEOS and preferably the first sol is TEOS in an aqueous solvent and the polymer particles are in aqueous suspension.
